# EUROPEAN PATENT SPECIFICATION

(11) **EP 4 139 784 B1**
(45) Date of publication and mention of the grant of the patent: **28.01.2026**
(21) Application number: 21708491.2
(22) Date of filing: 03.02.2021
(51) Int. Cl.: G06F 3/16, G10L 15/16, G10L 15/22

(54) **HIERARCHICAL CONTEXT SPECIFIC ACTIONS FROM AMBIENT SPEECH**
HIERARCHISCHE KONTEXTSPEZIFISCHE AKTIONEN AUS UMGEBUNGSSPRACHE
ACTIONS SPÉCIFIQUES À UN CONTEXTE HIÉRARCHIQUE À PARTIR DE LA PAROLE AMBIANTE

(30) Priority: 21.04.2020 US 202063013084 P
(43) Date of publication of application: 01.03.2023
(73) Proprietor: Google LLC, Mountain View, CA 94043 (US)
(72) Inventor: ELYADA, Oded, Mountain View, California 94043 (US); RAGNO, Robert John, Mountain View, California 94043 (US)
(74) Representative: Marks & Clerk GST
(86) International application number: PCT/US2021/016352
(87) International publication number: WO 2021/216164

(56) References cited:
- WO-A1-2020/027771
- US-A1- 2012 052 909
- US-A1- 2018 374 480
- US-B1- 6 327 566

## Description

### CROSS-REFERENCE TO RELATED APPLICATIONS

The present application claims filing benefit of United States Provisional Patent Application Serial No. 63/013,084 having a filing date of April 21, 2020.

### FIELD

The present disclosure relates generally to systems and methods for performing actions for a user based on ambient audio. More particularly, the present disclosure relates to systems and methods that leverage machine-learning operating in a background of a computing device to identify semantic entities in context data and operate the computing device based on the semantic entities.

### BACKGROUND

Computing devices (e.g., desktop computers, laptop computers, tablet computers, smartphones, wearable computing devices, and/or the like) are ubiquitous in modern society. They can support communications between their users, provide their users with information about their environments, current events, the world at large, and/or the like. A myriad of different computer applications are operable on such computing devices for performing a wide variety of actions. The user typically must manually select a particular computer application according to the action that the user wishes to perform. US6327566 discloses an efficient method and system, particularly well-suited for correcting natural language understanding (NLU) commands, that corrects spoken commands misinterpreted by a speech recognition system. US2012052909 discloses a mobile terminal and controlling method thereof, by which a user can control a mobile terminal and each device connected to the terminal using a speech via the mobile terminal while the mobile terminal and external digital devices are connected together via a prescribed interface.

### SUMMARY

Aspects and advantages of the present disclosure will be set forth in part in the following description, or may be obvious from the description, or may be learned through practice of embodiments of the present disclosure. The invention is set out in the appended set of claims.

Other aspects of the present disclosure are directed to various systems, apparatuses, non-transitory computer-readable media, user interfaces, and electronic devices.

These and other features, aspects, and advantages of the present disclosure will become better understood with reference to the following description and appended claims. The accompanying drawings, which are incorporated in and constitute a part of this specification, illustrate embodiments of the present disclosure and, together with the description, serve to explain the principles of the present disclosure.

### BRIEF DESCRIPTION OF THE DRAWINGS

A full and enabling description of the present disclosure, directed to one of ordinary skill in the art, is set forth in the specification, which makes reference to the appended figures, in which:
Figure 1A depicts a block diagram of an example computing system for recognizing and implementing ambient audio queries according to example embodiments of the present disclosure.
Figure 1B depicts a block diagram of an example computing system for recognizing and implementing ambient audio queries according to example embodiments of the present disclosure.
Figure 1C depicts a block diagram of an example computing system for recognizing and implementing ambient audio queries according to example embodiments of the present disclosure.
Figure 2A depicts a block diagram of an example computing system including one or more machine-learned models according to example embodiments of the present disclosure.
Figure 2B depicts a block diagram of an example computing system including one or more machine-learned models according to example embodiments of the present disclosure.
Figure 3A depicts a computing device configured to obtain ambient audio data according to example embodiments of the present disclosure.
Figure 3B depicts a computing device including a command path responsive to ambient audio data according to example embodiments of the present disclosure.
Figure 4 depicts a computing device including a command path responsive to ambient audio data according to example embodiments of the present disclosure.
Figure 5A depicts a user computing device including tools to correct an incorrect command action according to example embodiments of the present disclosure.
Figure 5B depicts a user computing device including a corrected command path according to example embodiments of the present disclosure.
Figure 6 depicts an example context tree according to example embodiments of the present disclosure.
Figure 7 depicts a flow chart diagram of an example method for providing a command path based on ambient audio data according to example embodiments of the present disclosure.

### DETAILED DESCRIPTION

Generally, the present disclosure is directed to systems and methods which can operate in a background of a computing device to automatically recognize commands that the computing device hears in a variety of audio signals, including ambient audio signals, and provide control actions to a user based on the commands. For example, the systems and methods of the present disclosure can be implemented on a computing device, such as a user's smartphone, in a background of the computing device to identify semantic entities that the computing device hears from a variety of audio signals, such as ambient audio spoken by the user. Example aspects of the present disclosure are discussed with respect to ambient audio data for the purposes of illustration. However, example aspects of the present disclosure can be extended to other ambient data, such as ambient video data (e.g., recognized via OCR).

The term "ambient" is generally used herein to mean an audio signal which has been collected using a microphone or otherwise present in a general environment of a device. Typically, the audio signal includes speech from the user operating the computing device. The audio signal may be collected during a period of time in which the method is carried out, e.g. the method may be performed repeatedly so as to monitor ambient sound continuously during the period of time that the audio signal is collected (as opposed to pre-recorded audio which was collected and stored prior to the method commencing). The ambient audio may constitute an "ambient interaction" with the computing device, in which the user speaks on of more words for the computer device to act upon. Each semantic entity may be one item in a database of predefined semantic entities to which the computing device has access, or may be a plurality of items in the database. In some embodiments, the user can confirm collection of ambient audio, such by selectively enabling continual and/or durational ambient audio collection. For instance, a user can interact with an interface element that, when interacted with, allows collection of ambient audio for a period of time following the interaction. **In** some embodiments, the interface element may additionally enable use of audio collected a brief duration prior to the interaction.

Once a user has consented to allow systems and methods of the present disclosure to collect data, for instance, the computing device can identify various semantic entities (e.g., people, actions, content, etc.) within an ambient audio signal. Furthermore, the computing device can learn (e.g., by a machine-learned model) and/or otherwise obtain contexts associated with the computing device, such as, for example, application (app) contexts. The term "context" refers to a state of the computing device (e.g. a state of an application running on the computer), and can also be referred to as a context state. Based on the identified semantic entities and contexts of the computing device, the systems and methods of the present disclosure can determine control action(s) to be performed by the user device. For example, the systems and methods of the present disclosure can recognize a command entity that includes one or more semantic entities that are spoken by the user and directed to at least a portion of a function that is performable by the user device. Furthermore, the systems and methods of the present disclosure can determine a command path including an ordered one or more control actions to be implemented by the user device based on the command entity. The command path can be presented to the user and the user can select a control action of the command path. Control actions up to (e.g., that result in a context associated with) and/or including the selected control action can be implemented by a computing device. **In** this way, the computing device can assist the user in inputting desirable control actions.

Additionally and/or alternatively, the computing device can verify the command path with the user prior to implementing the command path so that a "false" command is not implemented. Additionally and/or alternatively, the computing device can provide a degree of usefulness even in the case of a false command action, as the device can implement at least a portion of a command path corresponding to a correct command. **In** some embodiments, the systems and methods can provide a resulting command path to the user based on the selected control action. For example, if the command path is indicative of a command to send a picture to a recipient and the command path indicates an incorrect command action (e.g., a picture to be sent, recipient, etc.) that is different from a command action the user intended (e.g., another picture, different recipient, etc.) the user can be provided with tools to correct the incorrect command action.

It can be desirable for computing devices, such as a user's cell phone or smartphone, tablet computer, laptop computer, etc., to assist the user in performing tasks. For instance, conventional methods for user control of the computing device can be reliable, but may, in some cases, be time-consuming. For example, if a user wishes to send a photo to a friend, conventional operation of the user device to send the photo may include, for example, opening a messaging application, selecting the friend to send the photo to, selecting the photo to be sent, etc. Each of these steps can be time-consuming for a user to perform manually. Furthermore, in some cases, performing a task using the computing device can interrupt another use of the computing device. For example, if the user is in another application from the messaging application, sending the photo may include quitting the current application and switching to the messaging application. Some solutions (e.g., virtual assistants) can perform tasks based on spoken user queries. However, the solutions are typically operated in response to a user request, which can be interruptive to a user. Thus, solutions that can operate in the background of a computing device without substantially interrupting the user's operation of the computing device can be desirable. Furthermore, it can be necessary for solutions to preserve the privacy of the user and/or others proximate the user.

Thus, in some implementations, in order to obtain the benefits of the techniques described herein, the user may be required to allow the collection and analysis of audio signals (e.g., ambient audio), visual signals, and/or other context data by his or her computing device. For example, in some implementations, users may be provided with an opportunity to control whether programs or features collect such audio signals. If the user does not allow collection and use of such audio signals, then the user may not receive the benefits of the techniques described herein. The user can also be provided with tools to revoke or modify consent. In addition, certain information or data can be treated in one or more ways before it is stored or used, so that user information is protected. As an example, a computing device can temporarily store such audio signals in an audio buffer (e.g., a DSP buffer) for analysis, and discard the audio signals following analysis. As another example, a computing device can perform most or all audio processing on the device (e.g., and not on remote computing devices) such that the audio data is not transmitted to or recorded by other computing devices. Additionally and/or alternatively, systems and methods according to the present disclosure can act in a privacy-preserving manner such that applications on a computing device do not receive additional data (e.g., audio signals, semantic entities (e.g., unless requested by the application), video data, etc.) as a consequence of operation of the systems and methods. For example, an application may only receive data if a user expressly approves to share the data with the application. In some embodiments, the audio data may be filtered such that only audio belonging to the consenting user of the device is used.

According to example aspects of the present disclosure, a computing device can obtain context data including an ambient audio signal received by at least one microphone. For example, the audio signal can include ambient audio received by the computing device, such as a phrase spoken by a user (e.g., to a third person), and/or other audio signals. A machine-learned model stored on the computing device can then analyze at least a portion of the audio signal to determine one or more semantic entities. For example, a speech recognition machine-learned model can be trained to recognize various people, places, things, dates/times, events, actions, media, or other semantic entities in audio signals which include speech. The analysis of the audio signal can be performed in a background of the computing device. As used herein, the phrase "in a background" when used in reference to analyzing an audio signal on a computing device means concurrently with another task being performed on the computing device (e.g. using a screen and/or user input component(s) (data input device(s)) of the computing device) or while the computing device is in an idle state. For example, the audio associated with a spoken phrase from the user can be analyzed while the user continues to use the computing device during and/or after speaking the phrase. **In** some implementations, the computing device can be configured to receive various ambient audio signals, such as when a user has authorized the computing device to capture ambient audio signals, such as human speech from a conversation, via a microphone of the computing device. For example, the user's computing device (e.g., smartphone) can be configured in an "always-on" mode in which a microphone of the computing device (e.g., smartphone) generates an audio signal based on ambient audio, which can be analyzed in a background of the computing device (e.g., smartphone) to identify semantic entities in the audio signal.

Other examples of context data can include text displayed in a user interface, audio played or processed by the computing system, audio detected by the computing system, information about the user's location (e.g., a location of a mobile computing device of the computing system), calendar data, and/or contact data. For instance, context data can include ambient audio detected by a microphone of the computing system (e.g., audio spoken to a target other than the computing system, phone audio processed during a phone call, etc.). Calendar data can describe future events or plans (e.g., flights, hotel reservations, dinner plans etc.). In some implementations, if the user has consented, the context data can additionally and/or alternatively include visual data (e.g., from a camera on the user device) including, for example, visual data subjected to optical character recognition to recognize text in the visual data. Example semantic entities that can be described by the model output include a word or phrase recognized in the text and/or audio. Additional examples include information about the user's location, such as a city name, state name, street name, names of nearby attractions, and the like.

A machine-learned model stored on the computing device can then be used to analyze at least a portion of the context data (e.g., ambient audio signal) to determine one or more semantic entities. As one example, determining one or more semantic entities from the ambient audio signal can include inputting, into a language processing model, the ambient audio signal and receiving, from the language processing model, the semantic entities. For example, in some implementations, a portion of an audio file, such as a rolling audio buffer, can be input into a machine-learned model trained to recognize various semantic entities. In some implementations, the machine- leamed model can be a speech recognition semantic entity identifier model configured to recognize various semantic entities in human speech. In some implementations, the machine-learned model can be a language translation semantic entity identifier model trained to recognize and/or translate various semantic entities in a foreign language. The audio signal, or a portion thereof, can be input into the machine-learned model, and the semantic entities can be received as an output of the machine-learned model. Further, the analysis of the audio signal can be performed in a background of the computing device, such as while the computing device is executing another task. For example, in implementations in which a user has provided appropriate authorization, an audio signal associated with a telephone call can be analyzed by a machine-learned model on a user's smartphone to identify semantic entities in the telephone conversation while the telephone conversation is occurring.

In some implementations, semantic entity recognition can be tailored to a context. For instance, a model (e.g., a machine-learned model, hotword model, etc.) can be tailored to a particular context. As one example, in some implementations, an application can register for a particular type of entity and recognized semantic entities conforming to that type can be determined for (e.g., provided to) that application. As another example, a semantic entity recognition model can supplement the model with additional data, such as data from text fields, lists, user interface elements, etc. on an application context. For example, if the semantic entity is a name, the model may supplement the semantic entity from the model with, for example, a matched string from a list of contacts to determine a proper spelling of the semantic entity.

**In** some implementations, the audio signal can be a streaming audio signal, such as an audio signal of an ongoing conversation and/or spoken phrase. As the streaming audio signal is obtained by the computing device, the streaming audio signal, or a portion thereof, can be analyzed by the machine-learned model on a rolling basis to identify a plurality of semantic entities. For example, a plurality of consecutive portions of the audio signal can be analyzed to identify the plurality of semantic entities. As one example, a rolling audio buffer (e.g., a circular buffer) may store some previous time duration of an ambient audio signal (e.g., about eight seconds of previous audio) that can be analyzed upon invocation. For instance, the length of the previous time duration can be selected to capture an average or greater than average length of time associated with a typical command statement such that the entire statement is available in the rolling audio buffer. As one example, the rolling audio buffer can be stored on a separate processor from a CPU of a computing device and retrieved and/or analyzed (e.g., by the CPU) in batches in deterministic manner and/or an invoked manner. For example, the buffer can be retrieved and/or analyzed every few seconds and/or in response to an invocation from the user, an application, etc.

Similarly, in some implementations, a plurality of semantic entities may be identified in a single portion of an audio signal. In some implementations, each respective semantic entity can be captured for a predetermined time period (e.g., eight seconds). In some implementations, a plurality of respective semantic entities can be captured at a time, such as in a list format. In some implementations, a plurality of the most recently identified semantic entities can be captured and/or retained, such as a rolling list of the most recently identified semantic entities.

Additionally and/or alternatively, in some embodiments and with consent from a user, a computing device can identify some or all of the plurality of semantic entities from visual context data. For example, in some embodiments, a computing device can recognize textual data in video and/or image data captured by the computing device and/or identify one or more semantic entities from the textual data. For example, if a camera on the computing device captures an image illustrating characters, numbers, words, etc., the computing device may recognize one or more semantic entities from the characters, numbers, words, etc.

The ambient audio signal can be descriptive of at least a portion of a function that is performable by a computing device. For example, the ambient audio signal can include one or more command entities (e.g., semantic entities that are directed to a command and/or a portion of a command). As one example, the ambient audio signal can include command entities such as, but not limited to, "send," "open," "message," or other words or phrases that are directed to command actions typically performable by a computing device. Additionally and/or alternatively, the ambient audio signal can include command entities such as, for example, names (e.g., of recipients, such as from a user's contact list), media types (e.g., images, videos, social media posts, etc.), and other suitable command entities. As one example, a string of semantic entities can be descriptive of a command entity, such as a particular media item. For example, the user (or, with consent, another individual, media, etc.) can speak a phrase such as "that photo I took last night" which can be associated with (e.g., indicative of) a command entity directed to a photo on the computing device taken the night before the user spoke the phrase. As another example, a phrase such as "a photo I took in Costa Rica" can include command entities directed to a photo on the computing device taken at a location in the country of Costa Rica. Similarly, command entities can be directed to any other suitable identifiers of media, such as, for example, date/time, descriptors, location, title, author, content type, etc., and/or combination thereof. Thus, as one example, a spoken phrase such as "send John that photo I took last night" can include command entities directed to an action (send), recipient (John), and item (photo). According to example aspects of the present disclosure, the statement may not be explicitly stated to the computing device. For example, the statement may be implicitly spoken by the user (e.g., to a third party) and not in response to a prompt from the computing device. As one example, the user may be speaking to John and say a phrase such as "I need to send you that photo I took last night" in which case the computing device can still obtain the statement once the user has consented to allow systems and methods of the present disclosure to collect ambient audio data.

According to example aspects of the present disclosure, the computing device can generate a command path based at least in part on the context data. For instance, the command path can include an ordered one or more command actions. The command action(s) can each and/or collectively correspond to an action performable by the computing device. For example, the command action(s) can collectively define an overall objective that is responsive to the statement.

In some implementations, generating a command path can include determining one or more semantic entities from an ambient audio signal. The semantic entities can include a sequence of command entities. For instance, a statement can be broken down into a sequence of command entities. A command entity can be a set of one or more semantic entities that is at least partially indicative of a command (e.g., a command statement, such as a task capable of being performed by the computing device). For example, a semantic entity such as "send," "message," "call," etc. can be a command entity. As another example, a name and/or other descriptor of a person (e.g., a recipient), media item, phrase, phone number, etc. can be a command entity.

In some implementations, generating a command path can include obtaining an ordered plurality of contexts of the computing system. Each of the ordered plurality of contexts can describe one or more candidate command actions and one or more context states. For instance, the context state(s) can be resultant from implementing candidate command actions at a context. For instance, each context (e.g., an application screen, function, etc.) can have an associated set of candidate command actions that can be performed by the user. As one example, the candidate command actions can include actions such as progressing to a new screen, selecting and/or entering data (e.g., textual data, media data, etc.), communication actions such as making a phone call or sending a textual and/or multimedia message, or other suitable actions. Upon performing a candidate command action, the computing device may advance to a next state (e.g., a context state).

As one example, the ordered plurality of contexts can be reflective of a context tree. For example, each of the context states can be represented as a node in the context tree, and the candidate command actions can define branches from a root node. The root note can be, for example, a home screen of the computing device. The root node may have candidate command actions such as opening applications, performing operating system functions, etc. The first subsequent layer to the root node can be, for example, application start pages, login pages, etc. Similarly, progressive screens, states, etc. of the applications can define subsequent nodes. Thus the context tree can be "hierarchical". This results in a command path which is at least partly hierarchical, that is including, for each of the contexts in the hierarchical tree, one or more corresponding associated command actions.

In some embodiments, the ordered plurality of contexts can be at least partially learned by a machine-learned model based on prior usage of a computing device by the user. For instance, an application context identifier model can be trained on prior device usage data to learn contexts (e.g., context states and/or candidate command actions) associated with a computing device. For instance, the model can learn context progressions based on typical user interactions.

Additionally and/or alternatively, the ordered plurality of contexts can be at least partially queried from one or more applications at least partially defining the ordered plurality of contexts. For instance, the applications can provide at least a portion of their structure (e.g., context states and/or candidate command actions) to, for example, the operating system and/or another application configured to provide the command path to the user. As one example, the applications can provide an API at least partially defining the internal structure of the applications. As another example, the applications can otherwise explicitly declare contexts.

In some implementations, generating a command path can include selecting, from each of the ordered plurality of contexts, one of the one or more candidate command actions for inclusion in the command path as one of the one or more command actions. For example, selecting, from each of the ordered plurality of contexts, one of the one or more candidate command actions can include iteratively selecting a selected command action of the one or more candidate command actions and determining a resultant context state of the ordered plurality of contexts based on the selected candidate command action. As one example, selecting one of the one or more candidate entities can include matching one of the one or more semantic entities descriptive of a command action to the one of the one or more candidate command actions. For instance, the computing device can recognize a plurality of command entities at least partially defining a command. The computing system can then iteratively match some or all of the command entities to a candidate command action. As one example, if the computing device recognizes the command entity "send," the computing device can match the "send" entity to a candidate command action from, for example, a messaging application that enables message sending. As another example, if the computing device recognizes the command entity "call," the computing device can match the "call" entity to a candidate command action from, for example, a cell application that enables the user to place phone calls.

According to example aspects of the present disclosure, the computing device can provide (e.g., display) the command path to the user. For instance, after determining the command path as an ordered one or more command actions, the computing device can provide some or all of the command actions to the user. As one example, the computing device can provide a list, flowchart, etc. of the command actions. In some implementations, the computing device can provide all of the command actions in the command path. Additionally and/or alternatively, the computing device can provide a subset of the command actions. For instance, the computing device can omit command actions corresponding to trivial actions, such as, for example, confirmation pop-ups, command actions from contexts with only one possible command action, high and/or low confidence command actions (e.g., command actions having an associated confidence above and/or below thresholds, respectively), intermediate steps between typical user selection cases (e.g., navigating a user interface through trivial screens that do not allow the objective of the selection to significantly diverge), and/or any other suitable trivial actions.

In some implementations, the command path can be provided to the user without interrupting a current application context of the computing device. For example, the command path can be provided in a user interface element that is separate from the current application context (e.g., associated with an operating system context) and that does not interrupt functions of the current application context. As one example, the command path can be provided as an overlay on top of a portion of the current application context.

According to example aspects of the present disclosure, the user can select a selected command action from the command path. For instance, the computing system can provide the command path to the user as a list of the ordered one or more command actions of the command path to the user such that the user can select the selected command action from the list of the ordered one or more command actions. In response to providing the command path to the user, a computing device can receive, from the user, a selected command action of the ordered plurality of command actions. As one example, the command path can be provided as one or more buttons or selectable items corresponding to one or more of the command actions in the command path, and the user can select one of the buttons or selectable items to determine the command path.

According to example aspects of the present disclosure, a computing device can, in response to receiving, from the user, a selected command action of the ordered one or more command actions, perform the selected command action. For instance, in some implementations, the ordered one or more command actions can include an ordered plurality of command actions. Thus, to perform the selected command action, the computing system can perform one or more prior command actions of the ordered plurality of command actions. The prior command action(s) can be prior, in the ordered plurality of command actions (that is, in the command path),to the selected command action. For example, the prior command action(s) can be command actions that, when performed, result in a context associated with the selected command action.

In some implementations, the command path (including, for example, prior command action(s) and/or a selected command action) can be performed in a manner that resembles user input. For example, the command actions can be performed using clicks, selections, fields, etc. that mimic a user input and/or do not expose the application performing the command actions (e.g., an operating system) to the applications and/or contexts that are receiving the command actions. In this way, privacy of the user can be protected and/or the applications receiving the command can be unaware of the command path.

In some implementations, a computing device can receive, from the user, a selected command action from a command path including one or more command actions that are subsequent to the selected command action. For instance, the selected command action may partially complete the user statement. In other words, the selected command action may require one or more additional steps (e.g., command actions) to be performed after the selected command action to complete the user statement. In some cases, a user may select a selected command action with subsequent command actions if the subsequent command actions are at least partially incorrect (e.g., differ from an overall objective of the user statement). As one example, if a user is interested in sending a photo to a recipient, and the command path includes an incorrect photo, recipient, command, etc., the user can select a selected command action such that all actions up to the incorrect command action are performed.

Although it can be desirable to provide an entirely correct command path, by providing the option to select a command action with subsequent command actions, the system and methods according to the present disclosure can nonetheless provide some degree of assistance to the user, even if the command path is only partially (i.e., not completely) correct. For instance, if only the final command is provided to the user, it may be difficult or impossible for the user to correct the final command, but if a hierarchical command path is provided to the user, the user may be provided with a limited benefit even for an incorrect command path.

Furthermore, in some implementations, the computing device and/or the user can correct an incorrect command path and/or incorrect command action. For example, in some implementations, the user can be provided with tools to correct an incorrect command action. As one example, the user can select a command action and the computing device can provide a user interface element to the user that includes functions operable to correct the incorrect command action. For example, if the user wishes to send a photo and the command path includes an incorrect photo, the user can be provided with tools to select the correct photo if the user selects a command action related to the photo. As one example, the user can be provided with all photos on the computing device, a subset of the photos on the computing device, and/or a ranking of the photos presented to the user based on a confidence score associated with the photos. For example, the computing device can present a sorted list of photos that is sorted based on a confidence score associated with the photos.

In some implementations, in response to receiving the selected command action from the user wherein the command path comprises one or more command actions that are subsequent to the selected command action, the computing device can determine, based at least in part on a user command action that is performed by the user subsequent to receiving the selected command action, a corrected command path, wherein the corrected command path comprises one or more corrected command actions that are subsequent to the user command action. Furthermore, a computing device can provide the corrected command path such that the user can instruct the computing device to implement at least a portion of the corrected command path.

As one example, the user command action can include a user correcting the command action via tools provided to the user. As another example, the user command action can include the user manually performing the user command action in place of the selected command action and/or a subsequent command action. For example, if the command path includes an incorrect command action, the user can select a command action prior to the incorrect command action, then manually perform the incorrect command action. In response to the user performing the incorrect command action, the computing device can determine a corrected command path. For example, if the user performs a different command than an incorrect command action, the subsequent command actions to the incorrect command action may still be at least partially correct.

As one example, if the user wishes to send a photo and the command path includes an incorrect photo, the remaining command actions may be accurate once the photo is corrected. In this case, the command path may remain substantially unchanged once the photo is corrected, and the corrected command path can be similar to the original command path. In some cases, such as if the command path includes an incorrect command, context, etc., the corrected command path may diverge from the original command path. As one example, if a user wishes to send a photo and the command path selects a messaging application, but the user wishes to send the photo through a social media application, the original command path may be different from the corrected command path. Thus, the computing device can determine a corrected command path at least partially based on the user action (e.g., selecting the correct application) and the original command path (e.g., the original semantic entities, such as, for example, the photo to be attached, the recipient, etc.).

The systems and methods of the present disclosure can provide a number of technical effects and benefits. For example, the systems methods provided herein can allow for user queries within an ambient audio signal to be identified, either automatically or in response to a request from the user. Additionally, by leveraging one or more machine-learned models (e.g., neural networks), the systems and methods of the present disclosure can increase user efficiency in using the computing device. For example, a user can easily perform a command that the user intended without requiring the potentially time-consuming process of entering and/or performing the command manually. Similarly, a user can achieve improved efficiency even if the suggested command is not entirely accurate, as the user can be provided with tools to correct an incorrect command path and/or execute only a portion of the command path.

The systems and methods of the present disclosure also provide improvements to computing technology. For instance, the systems and methods of the present disclosure can provide an improved manner of learning a plurality of ordered contexts associated with capabilities (e.g., applications) of a computing device. As one example, the plurality of ordered contexts can be represented as a context tree including a plurality of application contexts that branch based on candidate command actions. Thus, systems and methods of the present disclosure can facilitate determining a candidate command path through applications on the computing device.

With reference now to the Figures, example embodiments of the present disclosure will be discussed in further detail.

### Example Devices and Systems

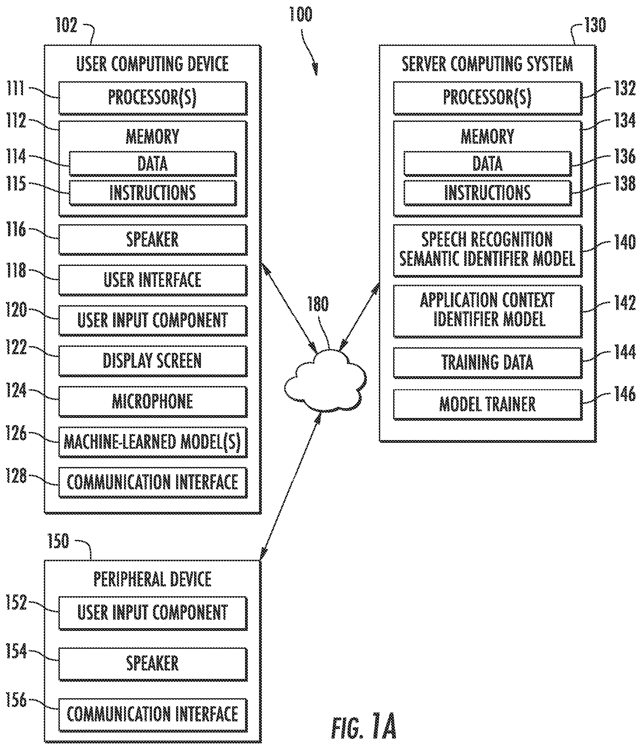

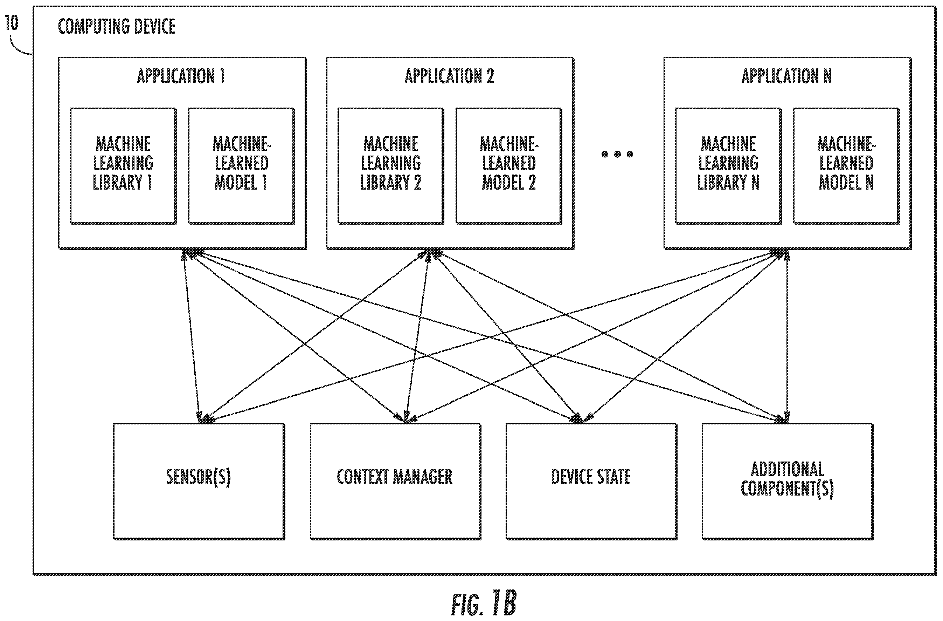

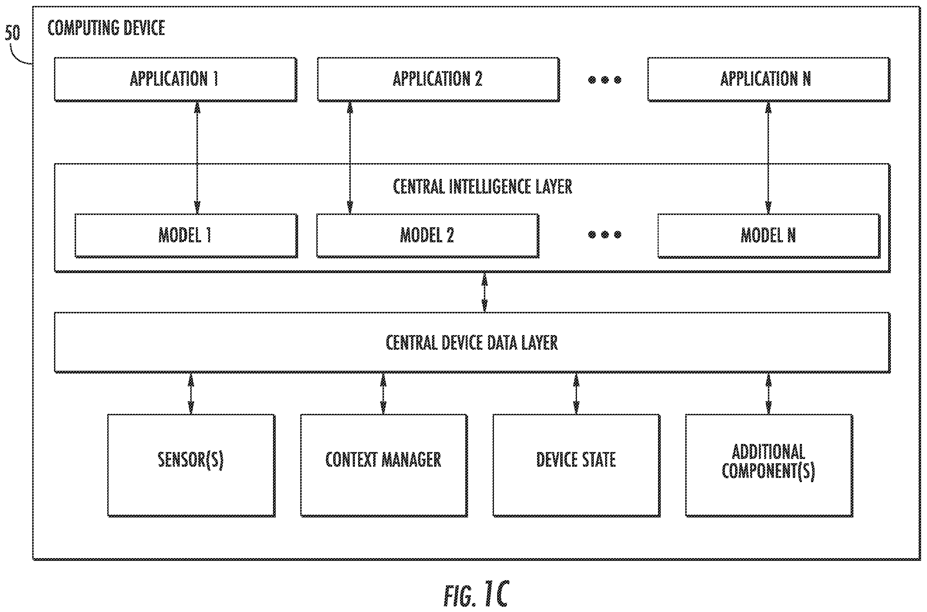

Figure 1 depicts an example system for recognizing a user statement in ambient audio and providing a command path to the user based on the user statement according to example aspects of the present disclosure. The system 100 can include a computing device 102 (e.g., a mobile computing device such as a smartphone), a server computing system 130, and a peripheral device 150 (e.g., a speaker device).

The computing device 102 can include one or more processors 111 and a memory 112. The one or more processors 111 can be any suitable processing device (e.g., a processor core, a microprocessor, an ASIC, a FPGA, a controller, a microcontroller, etc.) and can be one processor or a plurality of processors that are operatively connected. The memory 112 can include one or more non-transitory computer-readable storage mediums, such as RAM, ROM, EEPROM, EPROM, flash memory devices, magnetic disks, etc., and combinations thereof. In some implementations, the memory can include temporary memory, such as an audio buffer, for temporary storage of audio signals. The memory 112 can store data 114 and instructions 115 which can be executed by the processor 111 to cause the user computing device 102 to perform operations.

The computing device 102 can also include one or more speakers 116. The one or more speakers 116 can be, for example, configured to audibly play audio signals (e.g., generate sound waves including sounds, speech, etc.) for a user to hear. For example, an audio signal associated with a media file playing on the computing device 102 can be audibly played for a user by the one or more speakers 116. Similarly, an audio signal associated with a communication signal received by the computing device 102 (e.g., a telephone call) can be audibly played by the one or more speakers 116.

The computing device 102 can also include one or more display screens 122. The display screens 122 can be, for example, display screens configured to display various information to a user. In some implementations, the one or more display screens 122 can be touch-sensitive display screens capable of receiving a user input.

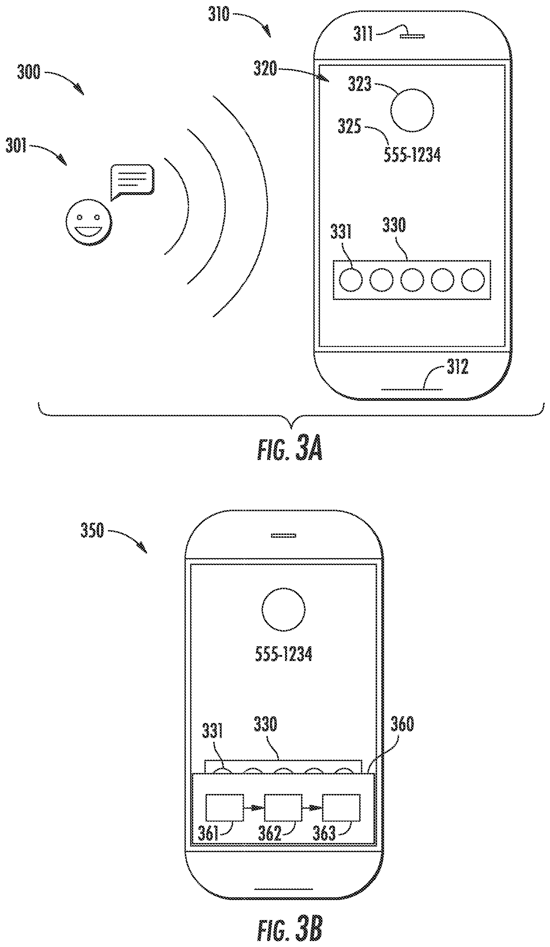

The computing device 102 can include one or more user interfaces 118. The user interfaces 118 can be used by a user to interact with the user computing device 102, such as to request semantic entities to be displayed or to request supplemental information on a particular semantic entity. The user interfaces 118 can be displayed on a display screen 122. Example user interfaces 118 according to example aspects of the present disclosure will be discussed in greater detail with respect to Figures 3A-7.

The computing device 102 can also include one or more user input components 120 that receive user input. For example, the user input components 120 can be a touch-sensitive component (e.g., a touch-sensitive display screen 122 or a touch pad) that is sensitive to the touch of a user input object (e.g., a finger or a stylus). In some implementations, the user can perform a "swipe" gesture, such as touching a first part of a touch-sensitive display screen 122 and sliding their fingers along the display screen 122 to a second part of the display screen, in order to request the one or more semantic entities be displayed on the display screen 122, as described herein. In some implementations, the touch-sensitive component can serve to implement a virtual keyboard. Other example user input components 120 include one or more buttons, a traditional keyboard, or other means by which a user can provide user input. The user input components 120 can allow for a user to provide user input, such as via a user interface 118 or in response to information displayed in a user interface 118.

The computing device 102 can further include one or more microphones 124. The one or more microphones 124 can be, for example, any type of audio sensor and associated signal processing components configured to generate audio signals from ambient audio. For example, ambient audio, such as human speech, can be received by the one or more microphones 124, which can generate audio signals based on the ambient audio.

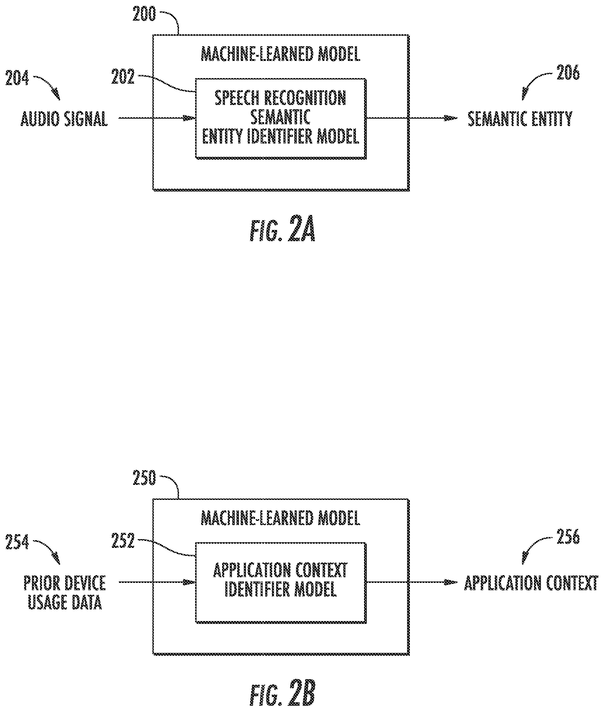

According to another aspect of the present disclosure, the computing device 102 can further include one or more machine-learned models 126. In some implementations, the machine-learned models 126 can be operable to analyze ambient audio signals obtained by the computing device 102. For example, the computing device 102 can be configured to receive ambient audio, and an associated ambient audio signal and/or other context data can be analyzed by the one or more machine-learned models 126 to identify semantic entities, as disclosed herein. In some implementations, the one or more machine-learned models 126 can be, for example, neural networks (e.g., deep neural networks) or other multi-layer non-linear models which output semantic entities (e.g., data descriptive of the semantic entities) in response to audio signals. Example machine-learned models 126 according to example aspects of the present disclosure will be discussed below with further reference to Figures 2A and 2B.

The computing device 102 can further include a communication interface 128. The communication interface 128 can include any number of components to provide networked communications (e.g., transceivers, antennas, controllers, cards, etc.). In some implementations, the computing device 102 includes a first network interface operable to communicate using a short-range wireless protocol, such as, for example, Bluetooth and/or Bluetooth Low Energy, a second network interface operable to communicate using other wireless network protocols, such as, for example, Wi-Fi, and/or a third network interface operable to communicate over GSM, CDMA, AMPS, 1G, 2G, 3G, 4G, 5G, LTE, GPRS, and/or other wireless cellular networks.

Referring still to Figure 1, the system 100 can further include server computing system 130. The server computing system 130 can include one or more processors 132 and a memory 134. The one or more processors 132 can be any suitable processing device (e.g., a processor core, a microprocessor, an ASIC, a FPGA, a controller, a microcontroller, etc.) and can be one processor or a plurality of processors that are operatively connected. The memory 134 can include one or more non-transitory computer-readable storage mediums, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

In some implementations, the server computing system 130 can store or include one or more machine-learned models. For example, the server computing system 130 can include one or more speech recognition semantic entity identifier models 140 and/or one or more application context identifier models 142.

For example, the speech recognition semantic entity identifier model 140 can be trained to recognize semantic entities in audio signals including ambient speech. For example, an audio signal, or a portion thereof, can be analyzed by the speech recognition semantic entity identifier model 140 to identify semantic entities present in the audio signal. In various implementations, the audio signal can be speech associated with ambient audio received by the computing device 102, such as a conversation between two people. In some implementations, the audio signal can be analyzed by maintaining a copy of the audio signal (and/or data indicative of the audio signal) in an audio buffer of the memory 112 of the computing device 120. At least a portion of the audio signal can be input into the speech recognition semantic entity identifier model 140. A semantic entity (or a plurality of semantic entities) can then be received as an output of the speech recognition semantic entity identifier model 140. In some implementations, the audio signal and/or data indicative of the audio signal maintained in the audio buffer can be discarded following analysis, thereby helping to maintain bystander and user privacy.

The application context identifier model 142 can be trained to learn application contexts associated with the system 100. For instance, the application context identifier model 142 can receive prior usage data from the system 100 and learn application contexts from how the system 100 reacts to user input. As one example, the application context identifier model 142 can identify candidate command actions associated with a context and link subsequent contexts to the candidate command actions. For instance, the application context identifier model can learn a context tree associated with the system and/or update an existing context tree based on prior usage data.

Example machine-learned models, such as speech recognition semantic entity identifier model 140 and application context identifier model 142 according to example aspects of the present disclosure will be discussed in greater detail with respect to Figures 2A and 2B.

The server computing system 130 can include a model trainer 146 that trains the one or more machine-learned models 140, 142 using various training or learning techniques, such as, for example, backwards propagation of errors. **In** some implementations, performing backwards propagation of errors can include performing truncated backpropagation through time. The model trainer 146 can perform a number of generalization techniques (e.g., weight decays, dropouts, etc.) to improve the generalization capability of the models being trained.

In particular, the model trainer 146 can train the one or more machine-learned models 140, 142 based on a set of training data 144. The training data 144 can include, for example, audio signals labeled with semantic entities. For example, a human reviewer can annotate various audio signals with semantic entity labels, which can be used as training data 144 for one or more of the machine-learned models 140, 142. Additionally and/or alternatively, the training data 144 can include unsupervised (e.g., unlabeled) training data, such as prior usage data for system 100.

In some implementations, the server computing system 130 can implement model trainer 146 to train new models or update versions on existing models on additional training data 144. As an example, the model trainer 146 can use audio signals hand-labeled with new semantic entities to train one or more machine-learned models 140-142 to provide outputs including the new semantic entities.

The server computing system 130 can periodically provide the computing device 102 with one or more updated versions of one or more models 140, 142 included in the machine-learned models 126 stored on the computing device 102. The updated models 140, 142 can be transmitted to the user computing device 102 via network 180.

The model trainer 146 can include computer logic utilized to provide desired functionality. The model trainer 146 can be implemented in hardware, firmware, and/or software controlling a general purpose processor. For example, in some implementations, the model trainer 146 includes program files stored on a storage device, loaded into a memory 134 and executed by one or more processors 132. In other implementations, the model trainer 146 includes one or more sets of computer-executable instructions that are stored in a tangible computer-readable storage medium such as RAM hard disk or optical or magnetic media.

In some implementations, any of the processes, operations, programs, applications, or instructions described as being stored at or performed by the server computing system 130 can instead be stored at or performed by the computing device 102 in whole or in part, and vice versa. For example, a computing device 102 can include a model trainer 146 configured to train the one or more machine-learned models 126 stored locally on the computing device 102.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Referring still to Figure 1, system 100 can further include one or more peripheral devices 150. In some implementations, the peripheral device 150 can be an earbud device which can communicatively couple to the computing device 102.

The peripheral device 150 can include one or more user input components 152 that are configured to receive user input. The user input component(s) 152 can be configured to receive a user interaction indicative of a request. For example, the user input components 120 can be a touch-sensitive component (e.g., a touch pad) that is sensitive to the touch of a user input object (e.g., a finger or a stylus). The touch-sensitive component can serve to receive the user interaction indicative of the request, such as a "fetch" gesture (e.g., a pulldown motion), as described herein. Other example user input components 152 include one or more buttons, switches, or other means by which a user can provide user input. The user input components 152 can allow for a user to provide user input, such as to request one or more semantic entities be displayed.

The peripheral device 150 can also include one or more speakers 154. The one or more speakers 154 can be, for example, configured to audibly play audio signals (e.g., sounds, speech, etc.) for a user to hear. For example, an audio signal associated with a media file playing on the computing device 102 can be communicated from the computing device 102, such as over one or more networks 180, and the audio signal can be audibly played for a user by the one or more speakers 154. Similarly, an audio signal associated with a communication signal received by the computing device 102 (e.g., a telephone call) can be audibly played by the one or more speakers 154.

The peripheral device 150 can further include a communication interface 156. The communication interface 156 can include any number of components to provide networked communications (e.g., transceivers, antennas, controllers, cards, etc.). **In** some implementations, the peripheral device 150 includes a first network interface operable to communicate using a short-range wireless protocol, such as, for example, Bluetooth and/or Bluetooth Low Energy, a second network interface operable to communicate using other wireless network protocols, such as, for example, Wi-Fi, and/or a third network interface operable to communicate over GSM, CDMA, AMPS, 1G, 2G, 3G, 4G, 5G, LTE, GPRS, and/or other wireless cellular networks.

According to example aspects of the present disclosure, computing device 102 can be configured to display semantic entities to a user. For example, the computing device 102 can obtain an audio signal concurrently heard by a user. For example, the audio signal can include an audio signal associated with an application being executed by the computing device 102, such as media playing on the computing device 102, a communication signal communicated to the computing device 102 (e.g., a telephone call), an audio signal generated by a microphone 124 when ambient audio is received by the computing device 102, such as a conversation between a user and a third person, and/or other audio signals. The computing device 102 can then input the audio signal, or a portion thereof, into the machine-learned model(s) 126 to identify semantic entities in the audio signals. The semantic entities can be, for example, people, places, things, dates/times, events, or other semantically distinct entities.

The analysis of the audio signal can be performed in a background of the computing device 102, such as concurrently with another task being performed by the computing device 102. For example, analysis of an audio signal associated with media playing on the computing device 102 can be performed by the computing device 102 while the media plays. Stated differently, the analysis of the audio signal can be performed without interrupting the media playing or other task being performed on the computing device 102.

Further, the computing device 102 can then display the one or more semantic entities identified in the audio signal, such as on a display screen 122 of the computing device 102. For example, in various implementations, the one or more semantic entities can be displayed in a variety of ways, such as by displaying text, icons, pictures, etc. which are indicative of the semantic entities, and can be displayed in list format or via application-specific user interfaces 118. Example user interfaces 118 according to example aspects of the present disclosure will be discussed in greater detail with respect to Figures 3A-7.

In some implementations, upon invocation (e.g., a direct invocation and/or an indirect invocation) the computing device 102 can determine a selected portion of the audio signal for analysis based at least in part on a predetermined time period preceding receipt of the request from the user to identify the one or more semantic entities. For example, in some implementations, the computing device 102 can maintain a buffer in which an audio signal is temporarily stored as it is received (e.g., as an audio signal is generated by a microphone based on ambient audio). Upon receiving the user request, the computing device 102 can determine a selected portion of the audio signal for analysis based on a predetermined time period preceding receipt of the request from the user. For example, a portion of the audio signal can be selected according to a time at which an invocation, such as a direct invocation (e.g., a user gesture, indication, etc.) and/or an indirect invocation (e.g. an "always-on" state, detection of a hotword, etc.) is received. In some implementations, the portion of the audio signal can be a portion of the audio signal prior to the time at which the user request is received. For example, the 5-10 seconds (e.g., 8 seconds) of audio signal preceding receipt of the user request can be selected as the selected portion of the audio signal for analysis. In some implementations, the analysis of the audio signal can be performed in response to receiving the invocation, such as by analyzing only the selected audio portion by a machine-learned model 126 to determine the one or more semantic entities. In other implementations, the entire audio signal (or a portion thereof) can have been previously analyzed, such as on a rolling or continuous basis, and in response to receiving the user request, the semantic entities which have been identified within the selected audio portion can be utilized to determine a command path.

Figure 1A illustrates one example computing system that can be used to implement the present disclosure. Other computing systems can be used as well. For example, in some implementations, the user computing device 102 can include the model trainer 146 and the training dataset 144. In such implementations, the machine-learned model(s) 126 can be both trained and used locally at the user computing device 102. In some of such implementations, the user computing device 102 can implement the model trainer 146 to personalize the machine-learned model(s) 126 based on user-specific data.

Figure 1B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 1B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

Figure 1C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, a social broadcasting/social media application, media player application (e.g., music player, video player, etc.), news application, health application, travel application, etc. In some implementations, each application can communicate with the central intelligence layer (and model(s) stored therein) using an API (e.g., a common API across all applications).

The central intelligence layer includes a number of machine-learned models. For example, as illustrated in Figure 1C, a respective machine-learned model (e.g., a model) can be provided for each application and managed by the central intelligence layer. In other implementations, two or more applications can share a single machine-learned model. For example, in some implementations, the central intelligence layer can provide a single model (e.g., a single model) for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 1C, the central device data layer can communicate with a number of other components of the computing device, such as, for example, one or more sensors, a context manager, a device state component, and/or additional components. In some implementations, the central device data layer can communicate with each device component using an API (e.g., a private API).

### Example Model Arrangements

Figure 2A depicts a block diagram of an example artificial intelligence system 200 according to example embodiments of the present disclosure. In some implementations, the artificial intelligence system 200 can include one or more machine-learned model(s) 202 that are trained to receive context data 204, and, as a result of receipt of the context data 204, provide data that describes semantic entities 206. The context data 204 can include information displayed, detected, or otherwise processed by the computing system and/or information about the user and/or the user's interaction with the user interface. Examples of context data can include text displayed in a user interface, audio played or processed by the computing system, audio detected by the computing system, information about the user's location (e.g., a location of a mobile computing device of the computing system), calendar data, and/or contact data. For instance, context data can include ambient audio detected by a microphone of the computing system (e.g., audio spoken to a target other than the computing system, phone audio processed during a phone call, etc.). Calendar data can describe future events or plans (e.g., flights, hotel reservations, dinner plans etc.). Example semantic entities that can be described by the model output include a word or phrase recognized in the text and/or audio. Additional examples include information about the user's location, such as a city name, state name, street name, names of nearby attractions, and the like.

The semantic entities 206 can include command entities that are at least partially descriptive of actions available for performance by the artificial intelligence system 200 on behalf of a user of the computing system. For example, the semantic entities 206 can include one or more control actions available from a computer application that is distinct from the artificial intelligence system 200. As examples, the available control actions or content can include navigation actions from a navigation application, images from a photography application, scheduling actions from a calendar application, and so forth. The computer application(s) can be stored on the user computing device and/or stored remotely (e.g., at a server computing system) and accessed from the user computing device.

Figure 2B depicts an example artificial intelligence system 250 according to example embodiments of the present disclosure.. The artificial intelligence system 250 can include one or more machine-learned model(s) 252 that are trained to receive prior device usage data 254, and, as a result of receipt of the prior device usage data 254, provide data that describes application contexts 256. For example, application contexts 256 can include one or more available control actions at each context and subsequent contexts that are resultant from the available control actions.

### Example Operations

Figure 3A depicts a system 300 including a computing device 310 configured to obtain a user statement according to example embodiments of the present disclosure. For instance, computing device 310 can detect an ambient audio signal spoken by user 301. Computing device 310 can be or include, for example, computing device 102 of Figure 1. For instance, computing device 310 can include speakers 311 configured to play audio for user 301 and/or microphone 312 configured to detect audio from user 301.

Computing device 310 can be configured to display a context 320. For example, context 320 can correspond to a user interface, such as a collection of user interface elements that enable the user 301 to perform functions by the computing device 310. As one example, context 320 can be directed to a telephone application and can thus include user interface elements to facilitate placing telephone calls by the computing device 310. For instance, context 320 can include user interface elements such as a call participant picture 323, call participant telephone number 325, and control elements 330. For example, control elements 330 can include one or more input elements 331 (e.g., buttons). The user 301 can interact with the input elements 331 to perform candidate command actions. For example, if the context 320 is a telephone call context, such as from an application configured to carry out telephonic communications, the input elements 331 may be configured to cause the computing device 310 to perform command actions such as displaying a keypad, terminating the phone call, adding a new participant, or other suitable functions. As another example, if the context 320 is a messaging application, the context may include input elements 331 configured to perform functions such as composing a message, sending a message, attaching media items or other attachments to the message, etc.

According to example aspects of the present disclosure, computing device 310 can obtain context data including an ambient audio signal. For example, the audio signal can include ambient audio received by the computing device 310, such as a phrase spoken by user 301 (e.g., to a third person), and/or other audio signals. A machine-learned model stored on computing device 310 can then analyze at least a portion of the audio signal to determine one or more semantic entities. For example, a speech recognition machine-learned model can be trained to recognize various people, places, things, dates/times, events, actions, media, or other semantic entities in audio signals which include speech. The analysis of the audio signal can be performed in a background of the computing device 310. As used herein, the phrase "in a background" when used in reference to analyzing an audio signal on a computing device means concurrently with another task being performed on the computing device or while the computing device is in an idle state. For example, the audio associated with a spoken phrase from the user 301 can be analyzed while the user 301 continues to use the computing device 310 during and/or after speaking the phrase. **In** some implementations, the computing device 310 can be configured to receive various ambient audio signals, such as when the user 301 has authorized the computing device 310 to capture ambient audio signals, such as human speech from a conversation, via a microphone 312 of the computing device 310. For example, the computing device 310 (e.g., smartphone) can be configured in an "always-on" mode in which the microphone 312 generates an audio signal based on ambient audio, which can be analyzed in a background of the computing device (e.g., smartphone) to identify semantic entities in the audio signal.

Thus, in some implementations, in order to obtain the benefits of the techniques described herein, the user 301 may be required to allow the collection and analysis of audio signals by his or her computing device 310. For example, in some implementations, the user 301 may be provided with an opportunity to control whether programs or features collect such audio signals. If the user 301 does not allow collection and use of such audio signals, then the user 301 may not receive the benefits of the techniques described herein. The user 301 can also be provided with tools to revoke or modify consent. In addition, certain information or data can be treated in one or more ways before it is stored or used, so that user information is protected. As an example, computing device 310 can temporarily store such audio signals in an audio buffer for analysis, and discard the audio signals following analysis. As another example, computing device 310 can perform most or all audio processing on the device 310 (e.g., and not on remote computing devices) such that the audio data is not transmitted to or recorded by other computing devices.

Other examples of context data can include text displayed in context 320, audio played or processed by computing device 310, audio detected by the computing system, information about the user's location (e.g., a location of computing device 310), calendar data, and/or contact data. For instance, context data can include ambient audio detected by microphone 312 and/or phone audio processed during a phone call. Calendar data can describe future events or plans (e.g., flights, hotel reservations, dinner plans etc.). In some implementations, if the user 301 has consented, the context data can additionally and/or alternatively include visual data (e.g., from a camera on the computing device 310) including, for example, visual data subjected to optical character recognition to recognize text in the visual data. Example semantic entities that can be described by the model output include a word or phrase recognized in the text and/or audio. Additional examples include information about the user's location, such as a city name, state name, street name, names of nearby attractions, and the like.

A machine-learned model stored on the computing device 310 can then be used to analyze at least a portion of the context data (e.g., ambient audio signal) to determine one or more semantic entities. As one example, determining one or more semantic entities from the ambient audio signal can include inputting, into a language processing model, the ambient audio signal and receiving, from the language processing model, the semantic entities. For example, in some implementations, a portion of an audio file, such as a rolling audio buffer, can be input into a machine-learned model trained to recognize various semantic entities. In some implementations, the machine- leamed model can be a speech recognition semantic entity identifier model configured to recognize various semantic entities in human speech. In some implementations, the machine-learned model can be a language translation semantic entity identifier model trained to recognize and/or translate various semantic entities in a foreign language. The audio signal, or a portion thereof, can be input into the machine-learned model, and the semantic entities can be received as an output of the machine-learned model. Further, the analysis of the audio signal can be performed in a background of the computing device 310, such as while the computing device 310 is executing another task. For example, in implementations in which a user has provided appropriate authorization, an audio signal associated with a telephone call can be analyzed by a machine-learned model on the computing device 310 to identify semantic entities in the telephone conversation while the telephone conversation is occurring.

In some implementations, semantic entity recognition can be tailored to a context. For instance, a model (e.g., a machine-learned model, hotword model, etc.) can be tailored to a particular context. As one example, in some implementations, an application can register for a particular type of entity and recognized semantic entities conforming to that type can be determined for (e.g., provided to) that application. As another example, a semantic entity recognition model can supplement the model with additional data, such as data from text fields, lists, user interface elements (e.g., call participant picture 323, call participant telephone number 325, control elements 330, user input elements 331), etc. on an application context (e.g., 320). For example, if the semantic entity is a name, the model may supplement the semantic entity from the model with, for example, a matched string from a list of contacts to determine a proper spelling of the semantic entity.

In some implementations, the audio signal can be a streaming audio signal, such as an audio signal of an ongoing conversation and/or spoken phrase. As the streaming audio signal is obtained by the computing device 310, the streaming audio signal, or a portion thereof, can be analyzed by the machine-learned model on a rolling basis to identify a plurality of semantic entities. For example, a plurality of consecutive portions of the audio signal can be analyzed to identify the plurality of semantic entities. As one example, a rolling audio buffer (e.g., a circular buffer) may store some previous time duration of an ambient audio signal (e.g., about eight seconds of previous audio) that can be analyzed upon invocation. For instance, the length of the previous time duration can be selected to capture an average or greater than average length of time associated with a statement such that the entire statement is available in the rolling audio buffer. As one example, the rolling audio buffer can be stored on a separate processor from a CPU (not illustrated) of computing device 310 and retrieved and/or analyzed (e.g., by the CPU) in batches in deterministic manner and/or an invoked manner. For example, the buffer can be retrieved and/or analyzed every few seconds and/or in response to an invocation from the user 301, an application (e.g., a virtual assistant), etc.

Similarly, in some implementations, a plurality of semantic entities may be identified in a single portion of an audio signal. In some implementations, each respective semantic entity can be captured for a predetermined time period (e.g., eight seconds). In some implementations, a plurality of respective semantic entities can be captured at a time, such as in a list format. In some implementations, a plurality of the most recently identified semantic entities can be captured and/or retained, such as a rolling list of the most recently identified semantic entities.

The ambient audio signal can be descriptive of a statement from user 301. For example, the ambient audio signal can include one or more command entities (e.g., semantic entities that are directed to a command and/or a portion of a command). As one example, the ambient audio signal can include command entities such as, but not limited to, "send," "open," "message," or other words or phrases that are directed to command actions typically performable by a computing device 310. Additionally and/or alternatively, the ambient audio signal can include command entities such as, for example, names (e.g., of recipients, such as from a contact list), media types (e.g., images, videos, social media posts, etc.), and other suitable command entities. As one example, a string of semantic entities can be descriptive of a command entity, such as a particular media item. For example, the user 301 can speak a phrase such as "that photo I took last night" which can be associated with (e.g., indicative of) a command entity directed to a photo stored on and/or otherwise available to the computing device 310 and taken the night before the user 301 spoke the phrase. As another example, a phrase such as "a photo I took in Costa Rica" can include command entities directed to a photo stored on and/or otherwise available to the computing device 310 and taken at a location in the country of Costa Rica. Similarly, command entities can be directed to any other suitable identifiers of media, such as, for example, date/time, descriptors, location, title, author, content type, etc., and/or combination thereof. Thus, as one example, a spoken phrase such as "send John that photo I took last night" can include command entities directed to an action (send), recipient (John), and item (photo). According to example aspects of the present disclosure, the statement may not be explicitly stated to the computing device 310. For example, the statement may be implicitly spoken by the user 301 (e.g., to a third party) and not in response to a prompt from the computing device 310. As one example, the user 301 may be speaking to John and say a phrase such as "I need to send you that photo I took last night" in which case the computing device 310 can still obtain the statement once the user 301 has consented to allow systems and methods of the present disclosure to collect ambient audio data.

Figure 3B depicts a system 350 including the computing device 310 described with respect to Figure 3A and including a command path responsive to a statement according to example embodiments of the present disclosure. For instance, after receiving a statement in ambient audio, computing device 310 can provide command path interface element 360 to the user 301. For instance, command path interface element 360 can be an interactive user interface element depicting the command path to the user 301. The command path interface element 360 can thus enable the user 301 to select a selected command action of the ordered one or more command actions depicted in the command path interface element 360 for performance by the computing device 310. For instance, after uttering a statement, user 301 may be presented with command path interface element 360 including command action interface elements. As illustrated, command path interface element 360 includes three command action interface elements 361-363. It should be understood, however, that command path interface element 360 can include any suitable number of command action interface elements.

According to example aspects of the present disclosure, the computing device 310 can generate a command path (e.g., as provided in command path interface element 360) based at least in part on the context data. For instance, the command path (e.g., as provided in command path interface element 360) can include an ordered one or more command actions (e.g., 361-363). The command action(s) (e.g., 361-363) can each and/or collectively correspond to an action performable by the computing device 310. For example, the command action(s) (e.g., 361-363) can collectively define an overall objective that is responsive to the statement.

In some implementations, generating a command path (e.g., as provided in command path interface element 360) can include determining one or more semantic entities from an ambient audio signal. The semantic entities can include a sequence of command entities. For instance, a statement can be broken down into a sequence of command entities. A command entity can be a semantic entity that is at least partially indicative of a command. For example, a semantic entity such as "send," "message," "call," etc. can be a command entity. As another example, a name and/or other descriptor of a person (e.g., a recipient), media item, phrase, phone number, etc. can be a command entity.

In some implementations, generating a command path (e.g., as provided in command path interface element 360) can include obtaining an ordered plurality of contexts of the computing system. Each of the ordered plurality of contexts can describe one or more candidate command actions (e.g., 361-363) and one or more context states. For instance, the context state(s) can be subsequent context states that are resultant from implementing candidate command actions (e.g., 361-363) at a context (e.g., context 320). For instance, each context (e.g., an application screen, function, etc.) can have an associated set of candidate command actions (e.g., 361-363) that can be performed by the user. As one example, the candidate command actions (e.g., 361-363) can include actions such as progressing to a new screen, selecting and/or entering data (e.g., textual data, media data, etc.), communication actions such as making a phone call or sending a textual and/or multimedia message, or other suitable actions. Upon performing a candidate command action, the computing device 310 may advance to a next state (e.g., a context state).

As one example, the ordered plurality of contexts can be reflective of a context tree. For example, each of the context states can be represented as a node in the context tree, and the candidate command actions (e.g., 361-363) can define branches from a root note. The root note can be, for example, a home screen of the computing device 310. The root node may have candidate command actions (e.g., 361-363) such as opening applications, performing operating system functions, etc. The first subsequent layer to the root node can be, for example, application start pages, login pages, etc. Similarly, progressive screens, states, etc. of the applications can define subsequent nodes.

In some embodiments, the ordered plurality of contexts can be at least partially learned by a machine-learned model based on prior usage of computing device 310 by the user 301. For instance, an application context identifier model can be trained on prior device usage data to learn contexts (e.g., context states e.g., 320) and/or candidate command actions (e.g., 361-363)) associated with a computing device 310. Additionally and/or alternatively, the ordered plurality of contexts can be at least partially queried from one or more applications at least partially defining the ordered plurality of contexts. For instance, the applications can provide at least a portion of their structure (e.g., context states and/or candidate command actions (e.g., 361-363)) to, for example, the operating system and/or another application configured to provide the command path (e.g., as provided in command path interface element 360) to the user. As one example, the applications can provide an **API** at least partially defining the internal structure.

**In** some implementations, generating a command path (e.g., as provided in command path interface element 360) can include selecting, from each of the ordered plurality of contexts, one of the one or more candidate command actions (e.g., 361-363) for inclusion in the command path (e.g., as provided in command path interface element 360) as one of the one or more command actions (e.g., 361-363). For example, selecting, from each of the ordered plurality of contexts, one of the one or more candidate command actions (e.g., 361-363) can include iteratively selecting a selected command action of the one or more candidate command actions (e.g., 361-363) and determining a resultant context state of the ordered plurality of contexts based on the selected candidate command action. As one example, selecting one of the one or more candidate entities can include matching one of the one or more semantic entities descriptive of a command action to the one of the one or more candidate command actions (e.g., 361-363). For instance, the computing device 310 can recognize a plurality of command entities at least partially defining a command. The computing system can then iteratively match some or all of the command entities to a candidate command action. As one example, if the computing device 310 recognizes the command entity "send," the computing device 310 can match the "send" entity to a candidate command action from, for example, a messaging application that enables message sending. As another example, if the computing device 310 recognizes the command entity "call," the computing device 310 can match the "call" entity to a candidate command action from, for example, a cell application that enables the user to place phone calls.

According to example aspects of the present disclosure, the computing device 310 can provide the command path (e.g., as provided in command path interface element 360) to the user. For instance, after determining the command path (e.g., as provided in command path interface element 360) as an ordered one or more command actions (e.g., 361-363), the computing device 310 can provide some or all of the command actions (e.g., 361-363) to the user. As one example, the computing device 310 can provide a list, flowchart, etc. of the command actions (e.g., 361-363). In some implementations, the computing device 310 can provide all of the command actions (e.g., 361-363) in the command path (e.g., as provided in command path interface element 360). Additionally and/or alternatively, the computing device 310 can provide a subset of the command actions (e.g., 361-363). For instance, the computing device 310 can omit command actions corresponding to trivial actions, such as, for example, confirmation pop-ups, command actions from contexts with only one possible command action, high and/or low confidence command actions (e.g., command actions having an associated confidence above and/or below thresholds, respectively), intermediate steps between typical user selection cases (e.g., navigating a user interface through trivial screens that do not allow the objective of the selection to significantly diverge), and/or any other suitable trivial actions.

In some implementations, the command path (e.g., as provided in command path interface element 360) can be provided to the user without interrupting a current application context (e.g., 320) of the computing device 310. For example, the command path (e.g., as provided in command path interface element 360) can be provided in a user interface element 360 that is separate from the current application context 320 (e.g., associated with an operating system context) and that does not interrupt functions of the current application context 320. As one example, the command path (e.g., as provided in command path interface element 360) can be provided as an overlay on top of a portion of the current application context 320.

According to example aspects of the present disclosure, the user can select a selected command action from the command path (e.g., as provided in command path interface element 360). For instance, the computing system can provide the command path (e.g., as provided in command path interface element 360) to the user as a list of the ordered one or more command actions (e.g., 361-363) of the command path (e.g., as provided in command path interface element 360) to the user such that the user can select the selected command action from the list of the ordered one or more command actions (e.g., 361-363). In response to providing the command path (e.g., as provided in command path interface element 360) to the user, a computing device 310 can receive, from the user, a selected command action of the ordered plurality of command actions (e.g., 361-363). As one example, the command path (e.g., as provided in command path interface element 360) can be provided as one or more buttons or selectable items corresponding to one or more of the command actions (e.g., 361-363) in the command path (e.g., as provided in command path interface element 360), and the user can select one of the buttons or selectable items to determine the command path (e.g., as provided in command path interface element 360).

According to example aspects of the present disclosure, a computing device 310 can, in response to receiving, from the user, a selected command action of the ordered one or more command actions (e.g., 361-363), perform the selected command action. For instance, in some implementations, the ordered one or more command actions (e.g., 361-363) can include an ordered plurality of command actions (e.g., 361-363). Thus, to perform the selected command action, the computing system can perform one or more prior command actions (e.g., 361-363) of the ordered plurality of command actions (e.g., 361-363). The prior command action(s) can be prior (e.g., in the command path) to the selected command action. For example, the prior command action(s) can be command actions (e.g., 361-363) that, when performed, result in a context associated with the selected command action.

As one example, the command actions 361-363 may be provided as an ordered plurality such that command action 361 is performed before command action 362 and/or command action 362 is performed before command action 363. Thus, if the user selects command action 361, only command action 361 may be performed by the computing device 310. Additionally and/or alternatively, if the user selects command action 362, the computing device 310 may perform command action 361 and command action 362. Similarly, if the user selects command action 363, the computing device 310 may perform command actions 361-363.

In some implementations, the command path (e.g., as provided in command path interface element 360) (including, for example, prior command action(s) and/or a selected command action) can be performed in a manner that resembles user input. For example, the command actions (e.g., 361-363) can be performed using clicks, selections, fields, etc. that mimic a user input and/or do not expose the application performing the command actions (e.g., 361-363) (e.g., an operating system) to the applications and/or contexts (e.g., contexts 320 and/or other contexts, which may be different from context 320) that are receiving the command actions (e.g., 361-363). In this way, privacy of the user can be protected and/or the applications receiving the command can be unaware of the command path (e.g., as provided in command path interface element 360).

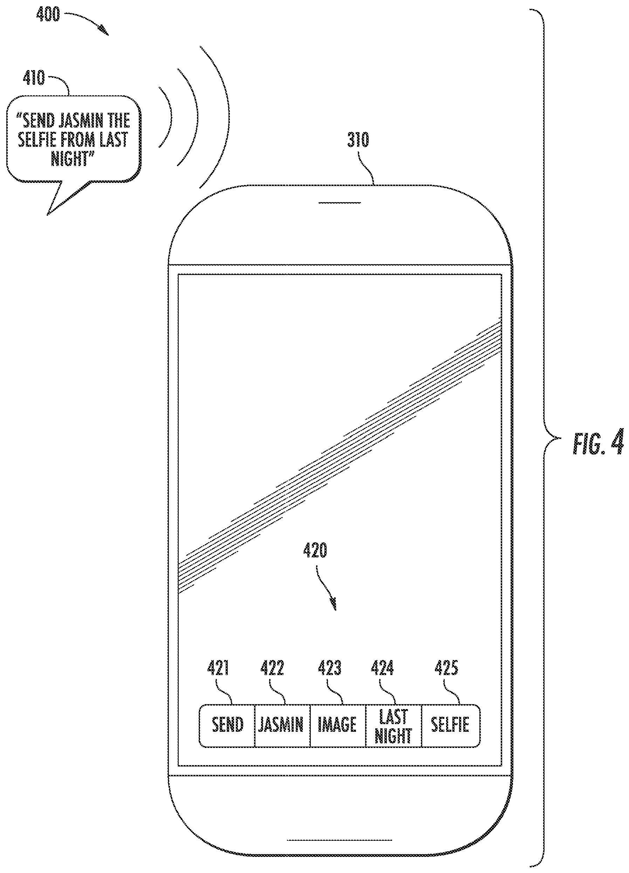

Figure 4 depicts a system 400 in which computing device 310 includes a command path 420 responsive to statement 410 according to example embodiments of the present disclosure. For instance, a user may utter the statement 410 "Send Jasmin the selfie from last night." The computing device 310 can generate command path 420 in response to the statement 410. For instance, the computing device 310 can recognize the command entity "send" in the statement 410 and provide the "send" command action 421. As one example, the user can select the "send" command action 421 to open a messaging application on computing device 310. As another example, the computing device 310 can recognize the recipient identifier "Jasmin" in the statement 410 and provide the "Jasmin" command action 422 to the user. The user can modify the command action 421 within the command path 420, or instruct the computing device 360 to use it in a way other than within the sequence of command actions defined by the command path 420. For instance, the user can select the "Jasmin" command action 422 to edit the recipient (e.g., select another recipient from a user's contacts list) and/or compose a blank message to Jasmin.

As another example, the computing device 310 can recognize the "selfie" command entity and determine the requirement to attach an image to a message. Thus, the computing device 310 can provide the "image" command action 423 to the user. For instance, the user can select the "image" command action 423 to attach an image to the message. As another example, the computing device 310 can recognize the "last night" command entity and determine that the image to be attached was taken the night before the statement 410 was uttered, and thus provide the "last night" command action 424 to the user. For instance, the user can select the "last night" command action 424 to filter provided images to images taken during the previous night. As another example, the computing device 310 can recognize the "selfie" command entity indicating that the provided image is taken in a selfie style (e.g., a picture of a person's face and upper torso). Thus, the computing device 310 can provide the "selfie" command action 425 to the user. For instance, the user can select the "selfie" command action 425 to attach the image that the computing device 310 expects the user to send and/or send the message.

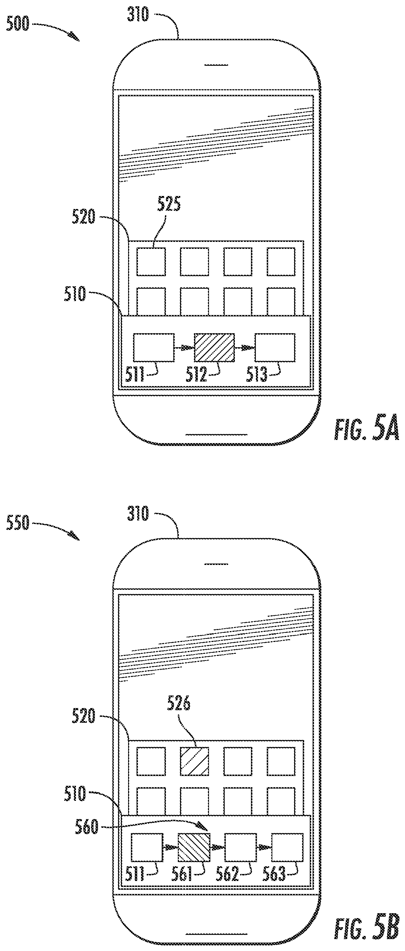

Figure 5A depicts a system 500 including a user computing device 310 including tools to correct an incorrect command action according to example embodiments of the present disclosure. For instance, computing device 310 can receive, from the user 301 (Figure 3A), a selected command action 512 from a command path 510 including one or more command actions (e.g., 513) that are subsequent to the selected command action 512. For instance, the selected command action 512 may partially complete a useful action (i.e. is not the last action required in order to perform the useful action to obtain a certain useful result). In other words, the selected command action 512 may require one or more additional steps (e.g., command actions 513) to be performed after the selected command action 512 to complete the statement. In some cases, a user 301 (Figure 3A) may select a selected command action 512 with subsequent command actions if the subsequent command actions are at least partially incorrect (e.g., differ from an overall objective of the statement). As one example, if user 301 (Figure 3A) is interested in sending a photo to a recipient, and the command path 510 includes an incorrect photo, recipient, command, etc., the user 301 (Figure 3A) can select a selected command action 512 such that **all** actions up to the incorrect command action are performed.

Although it can be desirable to provide an entirely correct command path 510, by providing the option to select a command action with subsequent command actions, the system and methods according to the present disclosure can nonetheless provide some degree of assistance to the user 301 (Figure 3A), even if the command path 510 is only partially correct. For instance, if only the final command is provided to the user 301 (Figure 3A), it may be difficult or impossible for the user 301 (Figure 3A) to correct the final command, but if a hierarchical command path 510 is provided to the user 301 (Figure 3A), the user 301 (Figure 3A) may be provided with a limited benefit even for an incorrect command path 510.

Furthermore, the computing device 310 and/or the user 301 (Figure 3A) can correct an incorrect command path 510 and/or incorrect command action 512. For example, in some implementations, the user 301 (Figure 3A) can be provided with tools (e.g., action selection element 520) to correct an incorrect command action (e.g., selected command action 512). As one example, the user 301 (Figure 3A) can select a command action 512 and the computing device 310 can provide the action selection element 520 to the user 301 (Figure 3A) that includes functions operable to correct the incorrect command action 512. For example, if the user 301 (Figure 3A) wishes to send a photo and the command path 510 includes an incorrect photo, the user 301 (Figure 3A) can be provided with the action selection element 520 to select the correct photo if the user 301 (Figure 3A) selects a command action related to the photo. As one example, the user 301 (Figure 3A) can be provided with a list of photos 525, such as a list of all photos 525 on the computing device 310, a subset of the photos 525 on the computing device 310, and/or a ranking of the photos 525 presented to the user 301 (Figure 3A) based on a confidence score associated with the photos 525. For example, the computing device 310 can present a sorted list of photos 525 that is sorted based on a confidence score associated with the photos 525.

Figure 5B depicts a system 550 including a user computing device 310 including a corrected command path according to example embodiments of the present disclosure. In response to receiving the selected command action 512 from the user 301 (Figure 3A) wherein the command path 510 comprises one or more command actions that are subsequent to the selected command action (e.g., 513), the computing device 310 determines, based at least in part on a user 301 (Figure 3A) command action that is performed by the user 301 (Figure 3A) subsequent to receiving the selected command action, a corrected command path 560, wherein the corrected command path 560 comprises one or more corrected command actions 561, 562, 563 that are subsequent to the selected command action 512 and/or the command actions prior to the selected command action (e.g., 511). Furthermore, a computing device 310 can provide the corrected command path 560 such that the user 301 (Figure 3A) can instruct the computing device 310 to implement at least a portion of the corrected command path 560.

As one example, the user 301 (Figure 3A) command action can include a user 301 (Figure 3A) correcting the command action 561 via tools (e.g., action selection element 520) provided to the user 301 (Figure 3A). For example, if the command path 510 (Figure 5A) includes an incorrect command action (e.g., 512), the user 301 (Figure 3A) can select the incorrect command action 512 and/or a command action prior to the incorrect command action 512, then manually perform the incorrect command action 512. As another example, the user can correct the incorrect command action 512 (e.g., into corrected command action 561) using the action selection element 520. In response to the user 301 (Figure 3A) correcting the incorrect command action 512, the computing device 310 can determine a corrected command path 560. For example, if the user 301 (Figure 3A) performs a different command than an incorrect command action 512, the subsequent command actions 561-563 to the incorrect command action 512 may still be at least partially correct.

As one example, if the user 301 (Figure 3A) wishes to send a photo and the command path 510 includes an incorrect photo, the remaining command actions may be accurate once the photo is corrected. In this case, the command path may remain substantially unchanged once the photo is corrected, and the corrected command path 560 can be similar to the original command path 510. For example, command actions 562 and 563 may instead be command action 513. In some cases, such as if the command path 510 includes an incorrect command, context, etc., the corrected command path 560 may diverge from the original command path 510. As one example, if a user 301 (Figure 3A) wishes to send a photo and the command path 510 selects a messaging application, but the user 301 (Figure 3A) wishes to send the photo through a social media application, the original command path 510 may be different from the corrected command path 560. Thus, the computing device 310 determines a corrected command path 560 at least partially based on the user action (e.g., selecting the correct application) and the original command path 510 (e.g., the original semantic entities, such as, for example, the photo to be attached, the recipient, etc.). For example, the user may select a corrected action 526 from a list of candidate command actions in the action selection element 520 which can prompt the computing device 310 to provide the corrected command path 560 to the user, which includes corrected command action 561in place of selected command action 512, and corrected command actions 562-563. As illustrated in Figure 5B, prior command action 511 can be included in corrected command path 560. However, in some implementations (e.g., implementations where prior command action 511 is performed to allow the user 301 (Figure 3A) to correct the command path 510), prior command action 511 may be omitted from corrected command path 560.

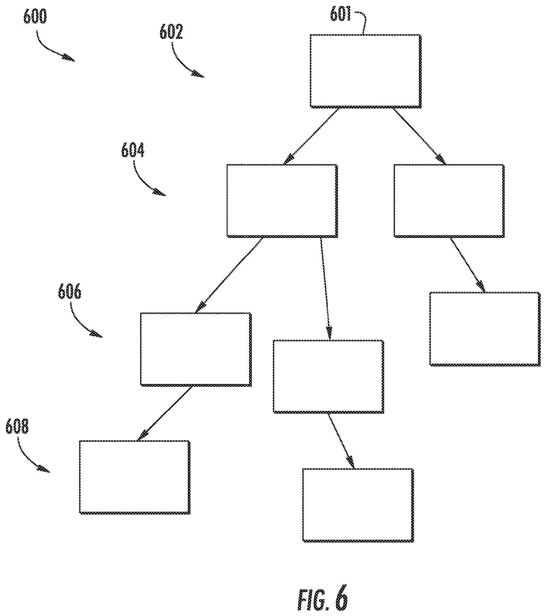

Figure 6 depicts an example context tree 600 according to example embodiments of the present disclosure. For instance, an ordered plurality of contexts for a computing device (e.g., computing device 310 of Figure 3) can be reflective of context tree 600. For example, each of the context states can be represented as a node in the context tree 600, and the candidate command actions can define branches. For instance, a first layer 602 of the context tree 600 can include a root node 601. The root note 601 can be, for example, a home screen of the computing device 310. The root node 601 may have candidate command actions such as opening applications, performing operating system functions, etc. The second layer 604 that is subsequent to the root node 601 can be, for example, application start pages, login pages, etc. Similarly, progressive screens, states, etc. of the applications can define subsequent nodes. As an example, third layer 606 can include contexts resulting from implementing command actions available on the home screens of applications, such as application contexts in second layer 604. Similarly, fourth layer 608 can include contexts resulting from implementing command actions that are available in contexts on third layer 606. In this manner, a computing system can represent a "path" through applications on the computing system and implement that path to perform an overall function.

### Example Methods

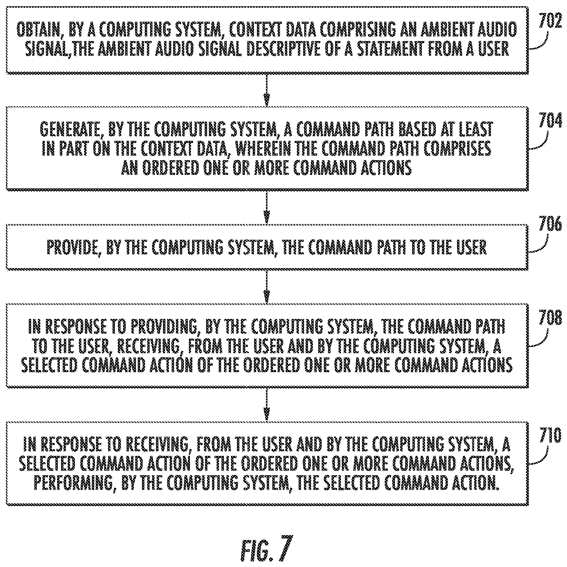

Figure 7 depicts a flow chart diagram of an example method 700 for providing a command path to enable a user to select a selected command action of the command path for performance by a computing device according to example embodiments of the present disclosure. Although Figure 7 depicts steps performed in a particular order for purposes of illustration and discussion, the methods of the present disclosure are not limited to the particularly illustrated order or arrangement. The various steps of the method 700 can be omitted, rearranged, combined, and/or adapted in various ways without deviating from the scope of the present disclosure.

At 702, the method 700 can include obtaining, by a computing system, context data including an ambient audio signal, the ambient audio signal descriptive of a statement from a user. For instance, a computing device can obtain context data including an ambient audio signal. For example, the audio signal can include ambient audio received by the computing device, such as a phrase spoken by a user (e.g., to a third person), and/or other audio signals. A machine-learned model stored on the computing device can then analyze at least a portion of the audio signal to determine one or more semantic entities. For example, a speech recognition machine-learned model can be trained to recognize various people, places, things, dates/times, events, actions, media, or other semantic entities in audio signals which include speech. The analysis of the audio signal can be performed in a background of the computing device. As used herein, the phrase "in a background" when used in reference to analyzing an audio signal on a computing device means concurrently with another task being performed on the computing device (e.g. with a screen, a speaker and/or a microphone of the device being dedicated at that time to performing that task) or while the computing device is in an idle state. For example, the audio associated with a spoken phrase from the user can be analyzed while the user continues to use the computing device during and/or after speaking the phrase. In some implementations, the computing device can be configured to receive various ambient audio signals, such as when a user has authorized the computing device to capture ambient audio signals, such as human speech from a conversation, via a microphone of the computing device. For example, the user's computing device (e.g., smartphone) can be configured in an "always-on" mode in which a microphone of the computing device (e.g., smartphone) generates an audio signal based on ambient audio, which can be analyzed in a background of the computing device (e.g., smartphone) to identify semantic entities in the audio signal.

Thus, in some implementations, in order to obtain the benefits of the techniques described herein, the user may be required to allow the collection and analysis of audio signals by his or her computing device. For example, in some implementations, users may be provided with an opportunity to control whether programs or features collect such audio signals. If the user does not allow collection and use of such audio signals, then the user may not receive the benefits of the techniques described herein. The user can also be provided with tools to revoke or modify consent. In addition, certain information or data can be treated in one or more ways before it is stored or used, so that user information is protected. As an example, a computing device can temporarily store such audio signals in an audio buffer for analysis, and discard the audio signals following analysis. As another example, a computing device can perform most or all audio processing on the device (e.g., and not on remote computing devices) such that the audio data is not transmitted to or recorded by other computing devices.

Other examples of context data can include text displayed in a user interface, audio played or processed by the computing system, audio detected by the computing system, information about the user's location (e.g., a location of a mobile computing device of the computing system), calendar data, and/or contact data. For instance, context data can include ambient audio detected by a microphone of the computing system and/or phone audio processed during a phone call. Calendar data can describe future events or plans (e.g., flights, hotel reservations, dinner plans etc.). In some implementations, if the user has consented, the context data can additionally and/or alternatively include visual data (e.g., from a camera on the user device) including, for example, visual data subjected to optical character recognition to recognize text in the visual data. Example semantic entities that can be described by the model output include a word or phrase recognized in the text and/or audio. Additional examples include information about the user's location, such as a city name, state name, street name, names of nearby attractions, and the like.

A machine-learned model stored on the computing device can then be used to analyze at least a portion of the context data (e.g., ambient audio signal) to determine one or more semantic entities. As one example, determining one or more semantic entities from the ambient audio signal can include inputting, into a language processing model, the ambient audio signal and receiving, from the language processing model, the semantic entities. For example, in some implementations, a portion of an audio file, such as a rolling audio buffer, can be input into a machine-learned model trained to recognize various semantic entities. In some implementations, the machine- leamed model can be a speech recognition semantic entity identifier model configured to recognize various semantic entities in human speech. In some implementations, the machine-learned model can be a language translation semantic entity identifier model trained to recognize and/or translate various semantic entities in a foreign language. The audio signal, or a portion thereof, can be input into the machine-learned model, and the semantic entities can be received as an output of the machine-learned model. Further, the analysis of the audio signal can be performed in a background of the computing device, such as while the computing device is executing another task. For example, in implementations in which a user has provided appropriate authorization, an audio signal associated with a telephone call can be analyzed by a machine-learned model on a user's smartphone to identify semantic entities in the telephone conversation while the telephone conversation is occurring.

In some implementations, semantic entity recognition can be tailored to a context. For instance, a model (e.g., a machine-learned model, hotword model, etc.) can be tailored to a particular context. As one example, in some implementations, an application can register for a particular type of entity and recognized semantic entities conforming to that type can be determined for (e.g., provided to) that application. The application may, for example, be associated with a plurality of semantic entities in a database, and when the context specifies that application, the semantic entity recognition can identify a semantic entity from among the associated plurality of semantic entities. More generally, each of multiple applications may be associated with a corresponding plurality of semantic entities in the database (e.g. with these sets of semantic entities optionally overlapping), and the semantic entity recognition can be based on a current application specified by the context. As another example, a semantic entity recognition model can supplement the model with additional data, such as data from text fields, lists, user interface elements, etc. on an application context. For example, if the semantic entity is a name, the model may supplement the semantic entity from the model with, for example, a matched string from a list of contacts to determine a proper spelling of the semantic entity.

In some implementations, the audio signal can be a streaming audio signal, such as an audio signal of an ongoing conversation and/or spoken phrase. As the streaming audio signal is obtained by the computing device, the streaming audio signal, or a portion thereof, can be analyzed by the machine-learned model on a rolling basis to identify a plurality of semantic entities. For example, a plurality of consecutive portions of the audio signal can be analyzed to identify the plurality of semantic entities. As one example, a rolling audio buffer (e.g., a circular buffer) may store some previous time duration of an ambient audio signal (e.g., about eight seconds of previous audio) that can be analyzed upon invocation. For instance, the length of the previous time duration can be selected to capture an average or greater than average length of time associated with a statement indicative of a function such that the entire statement is available in the rolling audio buffer. As one example, the rolling audio buffer can be stored on a separate processor from a CPU of a computing device and retrieved and/or analyzed (e.g., by the CPU) in batches in deterministic manner and/or an invoked manner. For example, the buffer can be retrieved and/or analyzed every few seconds and/or in response to an invocation from the user, an application, etc.

Similarly, in some implementations, a plurality of semantic entities may be identified in a single portion of an audio signal. **In** some implementations, each respective semantic entity can be captured for a predetermined time period (e.g., eight seconds). **In** some implementations, a plurality of respective semantic entities can be captured at a time, such as in a list format. **In** some implementations, a plurality of the most recently identified semantic entities can be captured and/or retained, such as a rolling list of the most recently identified semantic entities.

The ambient audio signal can be descriptive of a statement from a user. For example, the ambient audio signal can include one or more command entities (e.g., semantic entities that are directed to a command and/or a portion of a command). As one example, the ambient audio signal can include command entities such as, but not limited to, "send," "open," "message," or other words or phrases that are directed to command actions typically performable by a computing device. Additionally and/or alternatively, the ambient audio signal can include command entities such as, for example, names (e.g., of recipients, such as from a user's contact list), media types (e.g., images, videos, social media posts, etc.), and other suitable command entities. As one example, a string of semantic entities can be descriptive of a command entity, such as a particular media item. For example, the user can speak a phrase such as "that photo I took last night" which can be associated with (e.g., indicative of) a command entity directed to a photo on the computing device taken the night before the user spoke the phrase. As another example, a phrase such as "a photo I took in Costa Rica" can include command entities directed to a photo on the computing device taken at a location in the country of Costa Rica. Similarly, command entities can be directed to any other suitable identifiers of media, such as, for example, date/time, descriptors, location, title, author, content type, etc., and/or combination thereof. Thus, as one example, a spoken phrase such as "send John that photo I took last night" can include command entities directed to an action (send), recipient (John), and item (photo). According to example aspects of the present disclosure, the statement may not be explicitly stated to the computing device. For example, the statement may be implicitly spoken by the user (e.g., to a third party) and not in response to a prompt from the computing device. As one example, the user may be speaking to John and say a phrase such as "I need to send you that photo I took last night" in which case the computing device can still obtain the statement once the user has consented to allow systems and methods of the present disclosure to collect ambient audio data.

At 704, the method 700 can include generating, by the computing system, a command path based at least in part on the context data, wherein the command path comprises an ordered one or more command actions. For instance, the computing device can generate a command path based at least in part on the context data. For instance, the command path can include an ordered one or more command actions. The command action(s) can each and/or collectively correspond to an action performable by the computing device. For example, the command action(s) can collectively define an overall objective that is responsive to the statement.

In some implementations, generating a command path can include determining one or more semantic entities from an ambient audio signal. The semantic entities can include a sequence of command entities. For instance, a statement can be broken down into a sequence of command entities. A command entity can be a semantic entity that is at least partially indicative of a command. For example, a semantic entity such as "send," "message," "call," etc. can be a command entity. As another example, a name and/or other descriptor of a person (e.g., a recipient), media item, phrase, phone number, etc. can be a command entity.

In some implementations, generating a command path can include obtaining an ordered plurality of contexts of the computing system. Each of the ordered plurality of contexts can describe one or more candidate command actions and one or more context states. For instance, the context state(s) can be resultant from implementing candidate command actions at a context. For instance, each context (e.g., an application screen, function, etc.) can have an associated set of candidate command actions that can be performed by the user. As one example, the candidate command actions can include actions such as progressing to a new screen, selecting and/or entering data (e.g., textual data, media data, etc.), communication actions such as making a phone call or sending a textual and/or multimedia message, or other suitable actions. Upon performing a candidate command action, the computing device may advance to a next state (e.g., a context state).

As one example, the ordered plurality of contexts can be reflective of a context tree. For example, the context tree can be hierarchical. That is, each of the context states can be represented as a node in the context tree, and the candidate command actions can define branches from a root node. The root note can be, for example, a home screen of the computing device. The root node may have candidate command actions such as opening applications, performing operating system functions, etc. The first subsequent layer to the root node can be, for example, application start pages, login pages, etc. Similarly, progressive screens, states, etc. of the applications can define subsequent nodes. In some cases, the ordered contexts may define a "tree" of only one context (e.g., the current context) and actions in the contexts and/or respective outcomes of the actions or a currently selected field (e.g., a text entry box).

In some embodiments, the ordered plurality of contexts can be at least partially learned by a machine-learned model based on prior usage of a computing device by the user. For instance, an application context identifier model can be trained on prior device usage data to learn contexts (e.g., context states and/or candidate command actions) associated with a computing device. Additionally and/or alternatively, the ordered plurality of contexts can be at least partially queried from one or more applications at least partially defining the ordered plurality of contexts. For instance, the applications can provide at least a portion of their structure (e.g., context states and/or candidate command actions) to, for example, the operating system and/or another application configured to provide the command path to the user. As one example, the applications can provide an API at least partially defining the internal structure.

In some implementations, generating a command path can include selecting, from each of the ordered plurality of contexts, one of the one or more candidate command actions for inclusion in the command path as one of the one or more command actions. For example, selecting, from each of the ordered plurality of contexts, one of the one or more candidate command actions can include iteratively selecting a selected command action of the one or more candidate command actions and determining a resultant context state of the ordered plurality of contexts based on the selected candidate command action. As one example, selecting one of the one or more candidate entities can include matching one of the one or more semantic entities descriptive of a command action to the one of the one or more candidate command actions. For instance, the computing device can recognize a plurality of command entities at least partially defining a command. The computing system can then iteratively match some or all of the command entities to a candidate command action. As one example, if the computing device recognizes the command entity "send," the computing device can match the "send" entity to a candidate command action from, for example, a messaging application that enables message sending. As another example, if the computing device recognizes the command entity "call," the computing device can match the "call" entity to a candidate command action from, for example, a cell application that enables the user to place phone calls.

At 706, the method 700 can include providing (e.g. displaying), by the computing system, the command path to the user. For instance, the computing device can provide the command path to the user. For instance, after determining the command path as an ordered one or more command actions, the computing device can provide some or all of the command actions to the user. As one example, the computing device can provide a list, flowchart, etc. of the command actions. In some implementations, the computing device can provide all of the command actions in the command path. Additionally and/or alternatively, the computing device can provide a subset of the command actions. For instance, the computing device can omit command actions corresponding to trivial actions, such as, for example, confirmation pop-ups, command actions from contexts with only one possible command action, high and/or low confidence command actions (e.g., command actions having an associated confidence above and/or below thresholds, respectively), intermediate steps between typical user selection cases (e.g., navigating a user interface through trivial screens that do not allow the objective of the selection to significantly diverge), and/or any other suitable trivial actions. Providing the command path to the user can allow the user to confirm the suggestion command path before it is implemented. This can prevent executing unwanted commands. Additionally, the command path can be provided at an operating system level, which can limit data that is made available at each context for improved privacy.

In some implementations, the command path can be provided to the user without interrupting a current application context of the computing device. For example, the command path can be provided in a user interface element that is separate from the current application context (e.g., associated with an operating system context) and that does not interrupt functions of the current application context. As one example, the command path can be provided as an overlay on top of a portion of the current application context.

At 708, the method 700 can include, in response to providing, by the computing system, the command path to the user, receiving, from the user and by the computing system, a selected command action of the ordered one or more command actions. For instance, the user can select a selected command action from the command path. For instance, the computing system can provide the command path to the user as a list of the ordered one or more command actions of the command path to the user such that the user can select the selected command action from the list of the ordered one or more command actions. In response to providing the command path to the user, a computing device can receive, from the user, a selected command action of the ordered plurality of command actions. As one example, the command path can be provided as one or more buttons or selectable items corresponding to one or more of the command actions in the command path, and the user can select one of the buttons or selectable items to determine the command path.

At 710, the method 700 can include, in response to receiving, from the user and by the computing system, a selected command action of the ordered one or more command actions, performing, by the computing system, the selected command action. For instance, a computing device can, in response to receiving, from the user, a selected command action of the ordered one or more command actions, perform the selected command action. For instance, in some implementations, the ordered one or more command actions can include an ordered plurality of command actions. Thus, to perform the selected command action, the computing system can perform one or more prior command actions of the ordered plurality of command actions. The prior command action(s) can be prior to the selected command action. For example, the prior command action(s) can be command actions that, when performed, result in a context associated with the selected command action. As one example, the command action can be or can include filling out a text field.

In some embodiments, performing the action can include opening a context of the ordered plurality of contexts that is different from a current context. For instance, the current context can be a context that is being performed by the computing system prior to performing the selected command action.

In some implementations, the command path (including, for example, prior command action(s) and/or a selected command action) can be performed in a manner that resembles user input. For example, the command actions can be performed using clicks, selections, fields, etc. that mimic a user input and/or do not expose the application performing the command actions (e.g., an operating system) to the applications and/or contexts that are receiving the command actions. In this way, privacy of the user can be protected and/or the applications receiving the command can be unaware of the command path.

In some implementations, a computing device can receive, from the user, a selected command action from a command path including one or more command actions that are subsequent to the selected command action. For instance, the selected command action may partially complete the statement. In other words, the selected command action may require one or more additional steps (e.g., command actions) to be performed after the selected command action to complete the statement. In some cases, a user may select a selected command action with subsequent command actions if the subsequent command actions are at least partially incorrect (e.g., differ from an overall objective of the statement). As one example, if a user is interested in sending a photo to a recipient, and the command path includes an incorrect photo, recipient, command, etc., the user can select a selected command action such that all actions up to the incorrect command action are performed.

Although it can be desirable to provide an entirely correct command path, by providing the option to select a command action with subsequent command actions, the system and methods according to the present disclosure can nonetheless provide some degree of assistance to the user, even if the command path is only partially correct. For instance, if only the final command is provided to the user, it may be difficult or impossible for the user to correct the final command, but if a hierarchical command path is provided to the user, the user may be provided with a limited benefit even for an incorrect command path.

Furthermore, the computing device and/or the user can correct an incorrect command path and/or incorrect command action. For example, in some implementations, the user can be provided with tools to correct an incorrect command action. As one example, the user can select a command action and the computing device can provide a user interface element to the user that includes functions operable to correct the incorrect command action. For example, if the user wishes to send a photo and the command path includes an incorrect photo, the user can be provided with tools to select the correct photo if the user selects a command action related to the photo. As one example, the user can be provided with all photos on the computing device, a subset of the photos on the computing device, and/or a ranking of the photos presented to the user based on a confidence score associated with the photos. For example, the computing device can present a sorted list of photos that is sorted based on a confidence score associated with the photos.

In some implementations, in response to receiving the selected command action from the user wherein the command path comprises one or more command actions that are subsequent to the selected command action, the computing device can determine, based at least in part on a user command action that is performed by the user subsequent to receiving the selected command action, a corrected command path, wherein the corrected command path comprises one or more corrected command actions that are subsequent to the user command action. Furthermore, a computing device can provide the corrected command path such that the user can instruct the computing device to implement at least a portion of the corrected command path.

As one example, the user command action can include a user correcting the command action via tools provided to the user. As another example, the user command action can include the user manually performing the user command action in place of the selected command action and/or a subsequent command action. For example, if the command path includes an incorrect command action, the user can select a command action prior to the incorrect command action, then manually perform the incorrect command action. In response to the user performing the incorrect command action, the computing device can determine a corrected command path. For example, if the user performs a different command than an incorrect command action, the subsequent command actions to the incorrect command action may still be at least partially correct.

As one example, if the user wishes to send a photo and the command path includes an incorrect photo, the remaining command actions may be accurate once the photo is corrected. In this case, the command path may remain substantially unchanged once the photo is corrected, and the corrected command path can be similar to the original command path. In some cases, such as if the command path includes an incorrect command, context, etc., the corrected command path may diverge from the original command path. As one example, if a user wishes to send a photo and the command path selects a messaging application, but the user wishes to send the photo through a social media application, the original command path may be different from the corrected command path. Thus, the computing device can determine a corrected command path at least partially based on the user action (e.g., selecting the correct application) and the original command path (e.g., the original semantic entities, such as, for example, the photo to be attached, the recipient, etc.).

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, server processes discussed herein may be implemented using a single server or multiple servers working in combination. Databases and applications may be implemented on a single system or distributed across multiple systems. Distributed components may operate sequentially or in parallel.

Further, although the present disclosure is generally discussed with reference to computing devices, such as smartphones, the present disclosure is also applicable to other forms of computing devices as well, including, for example, laptop computing devices, tablet computing devices, wearable computing devices, desktop computing devices, mobile computing device, or other computing devices.

## Claims

1. A computer-implemented method for providing enhanced control of a computing system responsive to ambient interactions from a user (301), the computer-implemented method comprising:
obtaining (702), by a computing system, context data (204) comprising an ambient audio signal;
generating (704), by the computing system, a command path (420, 510) based at least in part on the context data (204), wherein the command path (420, 510) comprises an ordered one or more command actions;
providing (706), by the computing system, an interactive user (301) interface element depicting the command path (420, 510) to the user (301), the interactive user (301) interface element enabling the user (301) to select a selected command action of the ordered one or more command actions for performance by the computing system;
in response to providing, by the computing system, the command path (420, 510) to the user (301), receiving (708), from the user (301) and by the computing system, the selected command action of the ordered one or more command actions, wherein the command path (420) comprises one or more command actions that are subsequent to the selected command action;
in response to receiving the selected command action, determining a corrected command path (560), based at least in part on a user command action that is performed by the user (301) to correct the selected command action subsequent to receiving the selected command action, and the generated command path (420, 510), wherein the corrected command path (560) comprises one or more corrected command actions that are subsequent to the selected command action corrected by the user command action;
providing, by the computing system, the corrected command path (560) such that the user (301) can instruct the computing system to implement at least a portion of the corrected command path (560); and
in response to receiving, from the user (301) and by the computing system, a selected command action of the ordered one or more command actions from the corrected command path (560), performing (710), by the computing system, the selected command action to control the computing system based on the selected command action.

2. The computer-implemented method of any preceding claim, wherein the ordered one or more command actions comprises an ordered plurality of command actions, and wherein the method further comprises performing, by the computing system, one or more prior command actions of the ordered plurality of command actions, the one or more prior command actions being prior in the command path (420, 510) to the selected command action.

3. The computer-implemented method of any preceding claim, wherein generating, by the computing system, a command path (420, 510) comprises:
determining, by the computing system, one or more semantic entities (206) from the ambient audio signal, the one or more semantic entities (206) comprising a sequence of command entities;
obtaining, by the computing system, an ordered plurality of contexts of the computing system, each of the ordered plurality of contexts describing one or more candidate command actions and one or more subsequent context states, the one or more subsequent context states resultant from implementing the one or more candidate command actions; and
selecting, from each of the ordered plurality of contexts, one of the one or more candidate command actions for inclusion in the command path (420, 510) as one of the one or more command actions, and preferably,
wherein the ordered plurality of contexts comprises a context tree (600).

4. The computer-implemented method of claim 3, wherein the corrected command path (560) is also determined based at least in part on the determined one or more semantic entities (206) from the ambient audio signal.

5. The computer-implemented method of claim 3 or 4, wherein the ordered plurality of contexts is at least partially learned, by a machine-learned model, based on prior usage of the computing system by the user (301), and/or,
wherein the ordered plurality of contexts is at least partially queried from one or more applications at least partially defining the ordered plurality of contexts.

6. The computer-implemented method of any of claims 3 through 5, wherein determining, by the computing system, one or more semantic entities (206) from the ambient audio signal comprises inputting, into a language processing model, the ambient audio signal and receiving, from the language processing model, the one or more semantic entities (206), and/or,
wherein selecting, from each of the ordered plurality of contexts, one of the one or more candidate command actions comprises iteratively selecting a selected command action of the one or more candidate command actions and determining a resultant context state of the ordered plurality of contexts based on the selected command action.

7. The computer-implemented method of any of claims 3 through 6, wherein selecting, from each of the ordered plurality of contexts, one of the one or more candidate command actions comprises matching one of the one or more semantic entities (206) descriptive of a command action to the one of the one or more candidate command actions.

8. The computer-implemented method of any of claims 3 through 7, wherein performing, by the computing system, the selected command action comprises opening a context of the ordered plurality of contexts that is different from a current context, the current context being performed by the computing system prior to performing the selected command action.

9. A computing system configured to provide enhanced control of the computing system responsive to ambient interactions by a user (301), the computing system comprising:
one or more processors (111);
one or more non-transitory computer-readable media that collectively store instructions that, when executed by the one or more processors (111), cause the computing system to perform operations, the operations comprising:
obtaining (702), by the one or more processors (111), context data (204) comprising an ambient audio signal;
generating (704), by the one or more processors (111), a command path (420, 510) based at least in part on the context data (204), wherein the command path (420, 510) comprises an ordered one or more command actions;
providing (706), by the one or more processors (111), an interactive user (301) interface element depicting the command path (420, 510) to the user (301), the interactive user (301) interface element enabling the user (301) to select a selected command action of the ordered one or more command actions for performance by the one or more processors (111);
in response to providing, by the one or more processors (111), the command path (420) to the user (301), receiving (708), from the user (301) and by the one or more processors (111), the selected command action of the ordered one or more command actions, wherein the command path (420, 510) comprises one or more command actions that are subsequent to the selected command action;
in response to receiving the selected command action, determining a corrected command path (560), based at least in part on a user command action that is performed by the user (301) to correct the selected command action subsequent to receiving the selected command action, and the generated command path (420, 510), wherein the corrected command path (560) comprises one or more corrected command actions that are subsequent to the selected command action corrected by the user command action;
providing, by the one or more processors (111), the corrected command path (560) such that the user (301) can instruct the computing system to implement at least a portion of the corrected command path (560); and
in response to receiving, from the user (301) and by the one or more processors (111), a selected command action of the ordered one or more command actions from the corrected command path (560), performing (710), by the one or more processors (111), the selected command action to control the one or more processors (111) based on the selected command action.

10. The computing system of claim 9, wherein the ordered one or more command actions comprises an ordered plurality of command actions, and wherein the instructions further comprise performing, by the one or more processors (111), one or more prior command actions of the ordered plurality of command actions, the one or more prior command actions being prior to the selected command action.

11. The computing system of claim 9 or 10, wherein generating, by the one or more processors (111), a command path (420, 510) comprises:
determining, by the one or more processors (111), one or more semantic entities (206) from the ambient audio signal, the one or more semantic entities (206) comprising a sequence of command entities;
obtaining, by the one or more processors (111), an ordered plurality of contexts of the computing system, each of the ordered plurality of contexts describing one or more candidate command actions and one or more subsequent context states, the one or more subsequent context states associated with the computing system and resultant from implementing the one or more candidate command actions; and
selecting, from each of the ordered plurality of contexts, one of the one or more candidate command actions for inclusion in the command path (420, 510) as one of the one or more command actions, and preferably,
wherein the ordered plurality of contexts is at least partially learned, by a machine-learned model, based on prior usage of the computing system by the user (301).

12. The computing system of claim 11, wherein the ordered plurality of contexts is at least partially queried from one or more applications at least partially defining the ordered plurality of contexts.

13. The computing system of claim 11 or 12, wherein determining, by the one or more processors (111), one or more semantic entities (206) from the ambient audio signal comprises inputting, into a language processing model, the ambient audio signal and receiving, from the language processing model, the one or more semantic entities (206).

14. The computing system of any of claims 11 through 13, wherein selecting, from each of the ordered plurality of contexts, one of the one or more candidate command actions comprises iteratively selecting a selected command action of the one or more candidate command actions and determining a resultant context state of the ordered plurality of contexts based on the selected command action.

15. The computing system of any of claims 11 through 14, wherein selecting, from each of the ordered plurality of contexts, one of the one or more candidate command actions comprises matching one of the one or more semantic entities (206) descriptive of a command action to the one of the one or more candidate command actions.

## Patentansprüche

1. Computerimplementiertes Verfahren zum Bereitstellen einer verbesserten Steuerung eines Rechensystems, das auf Umgebungsinteraktionen eines Benutzers (301) reagiert, wobei das Computerimplementierte Verfahren Folgendes umfasst:
Erlangen (702) von Kontextdaten (204), die ein Umgebungsaudiosignal umfassen, durch ein Rechensystem;
Erzeugen (704) eines Befehlspfads (420, 510) durch das Rechensystem basierend zumindest teilweise auf den Kontextdaten (204), wobei der Befehlspfad (420, 510) eine geordnete eine oder mehrere Befehlsaktionen umfasst;
Bereitstellen (706) eines interaktiven Benutzeroberflächenelements (301), das den Befehlspfad (420, 510) darstellt, an den Benutzer (301) durch das Rechensystem, wobei das interaktive Benutzeroberflächenelement (301) den Benutzer (301) in die Lage versetzt, eine ausgewählte Befehlsaktion aus der geordneten einen oder den mehreren Befehlsaktionen zur Durchführung durch das Rechensystem auszuwählen;
als Reaktion auf das Bereitstellen des Befehlspfads (420, 510) an den Benutzer (301) durch das Rechensystem, Empfangen (708) der ausgewählten Befehlsaktion der geordneten einen oder den mehreren Befehlsaktionen von dem Benutzer (301) und durch das Rechensystem, wobei der Befehlspfad (420) eine oder mehrere Befehlsaktionen umfasst, die auf die ausgewählte Befehlsaktion folgen;
als Reaktion auf das Empfangen der ausgewählten Befehlsaktion, Bestimmen eines korrigierten Befehlspfads (560) basierend zumindest teilweise auf einer Benutzerbefehlsaktion, die durch den Benutzer (301) durchgeführt wird, um die ausgewählte Befehlsaktion im Anschluss an das Empfangen der ausgewählten Befehlsaktion zu korrigieren, und des erzeugten Befehlspfads (420, 510), wobei der korrigierte Befehlspfad (560) eine oder mehrere korrigierte Befehlsaktionen umfasst, die auf die ausgewählte Befehlsaktion folgen, die durch die Benutzerbefehlsaktion korrigiert wurde;
Bereitstellen des korrigierten Befehlspfads (560) durch das Rechensystem, sodass der Benutzer (301) das Rechensystem anweisen kann, mindestens einen Abschnitt des korrigierten Befehlspfads (560) zu implementieren; und
als Reaktion auf das Empfangen einer ausgewählten Befehlsaktion von dem Benutzer (301) und durch das Rechensystem von der geordneten einen oder den mehreren Befehlsaktionen aus dem korrigierten Befehlspfad (560), Durchführen (710) der ausgewählten Befehlsaktion durch das Rechensystem, um das Rechensystem basierend auf der ausgewählten Befehlsaktion zu steuern.

2. Computerimplementiertes Verfahren nach einem der vorhergehenden Ansprüche, wobei die geordnete eine oder die mehreren Befehlsaktionen eine geordnete Vielzahl von Befehlsaktionen umfasst und wobei das Verfahren ferner Durchführen einer oder mehrerer vorheriger Befehlsaktionen der geordneten Vielzahl von Befehlsaktionen durch das Rechensystem umfasst, wobei die eine oder die mehreren vorherigen Befehlsaktionen in dem Befehlspfad (420, 510) vor der ausgewählten Befehlsaktion liegen.

3. Computerimplementiertes Verfahren nach einem der vorhergehenden Ansprüche, wobei das Erzeugen eines Befehlspfades (420, 510) durch das Rechensystem Folgendes umfasst:
Bestimmen einer oder mehrerer semantischer Entitäten (206) aus dem Umgebungsaudiosignal durch das Rechensystem, wobei die eine oder die mehreren semantischen Entitäten (206) eine Sequenz von Befehlsentitäten umfassen;
Erlangen einer geordneten Vielzahl von Kontexten des Rechensystems durch das Rechensystem, wobei jeder der geordneten Vielzahl von Kontexten eine oder mehrere in Frage kommende Befehlsaktionen und einen oder mehrere nachfolgende Kontextzustände beschreibt, wobei der eine oder die mehreren nachfolgenden Kontextzustände aus dem Implementieren der einen oder der mehreren Kandidatenbefehlsaktionen resultieren; und
Auswählen einer der einen oder der mehreren Kandidatenbefehlsaktionen aus jeder der geordneten Vielzahl von Kontexten zur Aufnahme in den Befehlspfad (420, 510) als eine der einen oder der mehreren Befehlsaktionen, und vorzugsweise wobei die geordnete Vielzahl von Kontexten einen Kontextbaum (600) umfasst.

4. Computerimplementiertes Verfahren nach Anspruch 3, wobei der korrigierte Befehlspfad (560) auch zumindest teilweise basierend auf der bestimmten einen oder den mehreren semantischen Entitäten (206) aus dem Umgebungsaudiosignal bestimmt wird.

5. Computerimplementiertes Verfahren nach Anspruch 3 oder 4, wobei die geordnete Vielzahl von Kontexten zumindest teilweise durch ein Maschinenlernmodell basierend auf der vorherigen Nutzung des Rechensystems durch den Benutzer (301) gelernt wird und/oder
wobei die geordnete Vielzahl von Kontexten zumindest teilweise von einer oder mehreren Anwendungen abgefragt wird, die zumindest teilweise die geordnete Vielzahl von Kontexten definieren.

6. Computerimplementiertes Verfahren nach einem der Ansprüche 3 bis 5, wobei das Bestimmen einer oder mehrerer semantischer Entitäten (206) aus dem Umgebungsaudiosignal durch das Rechensystem das Eingeben des Umgebungsaudiosignals in ein Sprachverarbeitungsmodell und das Empfangen der einen oder der mehreren semantischen Entitäten (206) von dem Sprachverarbeitungsmodell umfasst und/oder
wobei das Auswählen einer der einen oder mehreren Kandidatenbefehlshandlungen aus jeder der geordneten Vielzahl von Kontexten iteratives Auswählen einer ausgewählten Befehlsaktion aus der einen oder den mehreren Kandidatenbefehlshandlungen und Bestimmen eines resultierenden Kontextstatus der geordneten Vielzahl von Kontexten basierend auf der ausgewählten Befehlsaktion umfasst.

7. Computerimplementiertes Verfahren nach einem der Ansprüche 3 bis 6, wobei das Auswählen einer der einen oder der mehreren Kandidatenbefehlsaktionen aus jeder der geordneten Vielzahl von Kontexten das Abgleichen einer der einen oder der mehreren semantischen Entitäten (206), die eine Befehlsaktion beschreiben, mit der einen der einen oder der mehreren Kandidatenbefehlsaktionen umfasst.

8. Computerimplementiertes Verfahren nach einem der Ansprüche 3 bis 7, wobei das Durchführen der ausgewählten Befehlsaktion durch das Rechensystem Öffnen eines Kontexts aus der geordneten Vielzahl von Kontexten umfasst, der sich von einem aktuellen Kontext unterscheidet, wobei der aktuelle Kontext von dem Rechensystem vor dem Durchführen der ausgewählten Befehlsaktion durchgeführt wird.

9. Rechensystem, das dazu konfiguriert ist, eine verbesserte Steuerung des Rechensystems als Reaktion auf Umgebungsinteraktionen durch einen Benutzer (301) bereitzustellen, wobei das Rechensystem Folgendes umfasst:
einen oder mehrere Prozessoren (111);
ein oder mehrere nichttransitorische computerlesbare Medien, die gemeinsam Anweisungen speichern, die, wenn sie durch den einen oder die mehreren Prozessoren (111) ausgeführt werden, das Rechensystem veranlassen, Vorgänge durchzuführen, wobei die Vorgänge Folgendes umfassen:
Erlangen (702) von Kontextdaten (204), die ein Umgebungsaudiosignal umfassen, durch den einen oder die mehreren Prozessoren (111);
Erzeugen (704) eines Befehlspfads (420, 510) durch den einen oder die mehreren Prozessoren (111) basierend zumindest teilweise auf den Kontextdaten (204), wobei der Befehlspfad (420, 510) eine geordnete eine oder mehrere Befehlsaktionen umfasst;
Bereitstellen (706) eines interaktiven Benutzeroberflächenelements (301), das den Befehlspfad (420, 510) darstellt, an den Benutzer (301) durch den einen oder die mehreren Prozessoren (111), wobei das interaktive Benutzeroberflächenelement (301) den Benutzer (301) in die Lage versetzt, eine ausgewählte Befehlsaktion aus der geordneten einen oder den mehreren Befehlsaktionen zur Durchführung durch den einen oder die mehreren Prozessoren (111) auszuwählen;
als Reaktion auf das Bereitstellen des Befehlspfads (420) an den Benutzer (301) durch den einen oder die mehreren Prozessoren (111), Empfangen (708) der ausgewählten Befehlsaktion der geordneten einen oder der mehreren Befehlsaktionen von dem Benutzer (301) und durch den einen oder die mehreren Prozessoren (111), wobei der Befehlspfad (420, 510) eine oder mehrere Befehlsaktionen umfasst, die auf die ausgewählte Befehlsaktion folgen;
als Reaktion auf das Empfangen der ausgewählten Befehlsaktion, Bestimmen eines korrigierten Befehlspfads (560) basierend zumindest teilweise auf einer Benutzerbefehlsaktion, die durch den Benutzer (301) durchgeführt wird, um die ausgewählte Befehlsaktion im Anschluss an das Empfangen der ausgewählten Befehlsaktion zu korrigieren, und des erzeugten Befehlspfads (420, 510), wobei der korrigierte Befehlspfad (560) eine oder mehrere korrigierte Befehlsaktionen umfasst, die auf die ausgewählte Befehlsaktion folgen, die durch die Benutzerbefehlsaktion korrigiert wurde;
Bereitstellen des korrigierten Befehlspfads (560) durch den einen oder die mehreren Prozessoren (111), sodass der Benutzer (301) das Rechensystem anweisen kann, mindestens einen Abschnitt des korrigierten Befehlspfads (560) zu implementieren; und
als Reaktion auf das Empfangen einer ausgewählten Befehlsaktion von dem Benutzer (301) und durch den einen oder die mehreren Prozessoren (111) von der geordneten einen oder den mehreren Befehlsaktionen aus dem korrigierten Befehlspfad (560), Durchführen (710) der ausgewählten Befehlsaktion durch den einen oder die mehreren Prozessoren (111), um den einen oder die mehreren Prozessoren (111) basierend auf der ausgewählten Befehlsaktion zu steuern.

10. Rechensystem nach Anspruch 9, wobei die geordnete eine oder die mehreren Befehlsaktionen eine geordnete Vielzahl von Befehlsaktionen umfasst und wobei die Anweisungen ferner Durchführen einer oder mehrerer vorheriger Befehlsaktionen der geordneten Vielzahl von Befehlsaktionen durch den einen oder die mehreren Prozessoren (111) umfassen, wobei die eine oder die mehreren vorherigen Befehlsaktionen vor der ausgewählten Befehlsaktion liegen.

11. Rechensystem nach Anspruch 9 oder 10, wobei das Erzeugen eines Befehlspfades (420, 510) durch den einen oder die mehreren Prozessoren (111) Folgendes umfasst:
Bestimmen einer oder mehrerer semantischer Entitäten (206) aus dem Umgebungsaudiosignal durch den einen oder die mehreren Prozessoren (111), wobei die eine oder die mehreren semantischen Entitäten (206) eine Sequenz von Befehlsentitäten umfassen;
Erlangen einer geordneten Vielzahl von Kontexten des Rechensystems durch den einen oder die mehreren Prozessoren (111), wobei jeder der geordneten Vielzahl von Kontexten eine oder mehrere in Frage kommende Befehlsaktionen und einen oder mehrere nachfolgende Kontextzustände beschreibt, wobei der eine oder die mehreren nachfolgenden Kontextzustände dem Rechensystem zugeordnet sind und aus dem Implementieren der einen oder der mehreren Kandidatenbefehlsaktionen resultieren; und
Auswählen einer der einen oder der mehreren Kandidatenbefehlsaktionen aus jeder der geordneten Vielzahl von Kontexten zur Aufnahme in den Befehlspfad (420, 510) als eine der einen oder der mehreren Befehlsaktionen, und vorzugsweise wobei die geordnete Vielzahl von Kontexten zumindest teilweise durch ein Maschinenlernmodell basierend auf der vorherigen Nutzung des Rechensystems durch den Benutzer (301) gelernt wird.

12. Rechensystem nach Anspruch 11, wobei die geordnete Vielzahl von Kontexten zumindest teilweise von einer oder mehreren Anwendungen abgefragt wird, die zumindest teilweise die geordnete Vielzahl von Kontexten definieren.

13. Rechensystem nach Anspruch 11 oder 12, wobei das Bestimmen einer oder mehrerer semantischer Entitäten (206) aus dem Umgebungsaudiosignal durch den einen oder die mehreren Prozessoren (111) Eingeben des Umgebungsaudiosignals in ein Sprachverarbeitungsmodell und Empfangen der einen oder der mehreren semantischen Entitäten (206) von dem Sprachverarbeitungsmodell umfasst.

14. Rechensystem nach einem der Ansprüche 11 bis 13, wobei das Auswählen einer der einen oder der mehreren Kandidatenbefehlshandlungen aus jeder der geordneten Vielzahl von Kontexten iteratives Auswählen einer ausgewählten Befehlsaktion aus der einen oder den mehreren Kandidatenbefehlshandlungen und Bestimmen eines resultierenden Kontextstatus der geordneten Vielzahl von Kontexten basierend auf der ausgewählten Befehlsaktion umfasst.

15. Rechensystem nach einem der Ansprüche 11 bis 14, wobei das Auswählen einer der einen oder der mehreren Kandidatenbefehlsaktionen aus jeder der geordneten Vielzahl von Kontexten den Abgleich einer der einen oder der mehreren semantischen Entitäten (206), die eine Befehlsaktion beschreiben, mit der einen der einen oder der mehreren Kandidatenbefehlsaktionen umfasst.

## Revendications

1. Procédé mis en œuvre par ordinateur permettant un contrôle amélioré d'un système informatique en réponse aux interactions ambiantes d'un utilisateur (301), le procédé mis en œuvre par ordinateur comprenant :
l'obtention (702), par un système informatique, de données de contexte (204) comprenant un signal audio ambiant ;
la génération (704), par le système informatique, d'un chemin de commande (420, 510) sur la base au moins en partie des données de contexte (204), dans lequel le chemin de commande (420, 510) comprend une ou plusieurs actions de commande ordonnées ;
la fourniture (706), par le système informatique, d'un élément d'interface utilisateur interactif (301) décrivant le chemin de commande (420, 510) à l'utilisateur (301), l'élément d'interface utilisateur interactif (301) permettant à l'utilisateur (301) de sélectionner une action de commande sélectionnée parmi les une ou plusieurs actions de commande ordonnées pour être réalisées par le système informatique ;
en réponse à la fourniture, par le système informatique, du chemin de commande (420, 510) à l'utilisateur (301), la réception (708), de l'utilisateur (301) et par le système informatique, de l'action de commande sélectionnée parmi les une ou plusieurs actions de commande ordonnées, dans lequel le chemin de commande (420) comprend une ou plusieurs actions de commande qui sont postérieures à l'action de commande sélectionnée ;
en réponse à la réception de l'action de commande sélectionnée, la détermination d'un chemin de commande corrigé (560), sur la base au moins en partie d'une action de commande utilisateur qui est réalisée par l'utilisateur (301) pour corriger l'action de commande sélectionnée après réception de l'action de commande sélectionnée, et du chemin de commande généré (420, 510), dans lequel le chemin de commande corrigé (560) comprend une ou plusieurs actions de commande corrigées qui sont postérieures à l'action de commande sélectionnée corrigée par l'action de commande utilisateur ;
la fourniture, par le système informatique, du chemin de commande corrigé (560) de sorte que l'utilisateur (301) peut demander au système informatique de mettre en œuvre au moins une partie du chemin de commande corrigé (560) ; et
en réponse à la réception, de l'utilisateur (301) et par le système informatique, d'une action de commande sélectionnée parmi les une ou plusieurs actions de commande ordonnées du chemin de commande corrigé (560), la réalisation (710), par le système informatique, de l'action de commande sélectionnée pour contrôler le système informatique sur la base de l'action de commande sélectionnée.

2. Procédé mis en œuvre par ordinateur selon une quelconque revendication précédente, dans lequel les une ou plusieurs actions de commande ordonnées comprennent une pluralité ordonnée d'actions de commande, et dans lequel le procédé comprend également la réalisation, par le système informatique, d'une ou de plusieurs actions de commande antérieures de la pluralité ordonnée d'actions de commande, les une ou plusieurs actions de commande antérieures étant antérieures dans le chemin de commande (420, 510) à l'action de commande sélectionnée.

3. Procédé mis en œuvre par ordinateur selon une quelconque revendication précédente, dans lequel la génération, par le système informatique, d'un chemin de commande (420, 510) comprend :
la détermination, par le système informatique, d'une ou de plusieurs entités sémantiques (206) à partir du signal audio ambiant, les une ou plusieurs entités sémantiques (206) comprenant une séquence d'entités de commande ;
l'obtention, par le système informatique, d'une pluralité ordonnée de contextes du système informatique, chacun de la pluralité ordonnée de contextes décrivant une ou plusieurs actions de commande candidates et un ou plusieurs états de contexte ultérieurs, les un ou plusieurs états de contexte ultérieurs résultant de la mise en œuvre des une ou plusieurs actions de commande candidates ; et
la sélection, parmi chacun de la pluralité ordonnée de contextes, d'une des une ou plusieurs actions de commande candidates à inclure dans le chemin de commande (420, 510) en tant qu'une des une ou plusieurs actions de commande, et de préférence,
dans lequel la pluralité ordonnée de contextes comprend un arbre de contexte (600).

4. Procédé mis en œuvre par ordinateur selon la revendication 3, dans lequel le chemin de commande corrigé (560) est également déterminé au moins en partie sur la base des une ou plusieurs entités sémantiques déterminées (206) à partir du signal audio ambiant.

5. Procédé mis en œuvre par ordinateur selon la revendication 3 ou 4, dans lequel la pluralité ordonnée de contextes est au moins partiellement apprise, par un modèle d'apprentissage automatique, sur la base de l'utilisation antérieure du système informatique par l'utilisateur (301), et/ou,
dans lequel la pluralité ordonnée de contextes est au moins partiellement interrogée à partir d'une ou de plusieurs applications définissant au moins partiellement la pluralité ordonnée de contextes.

6. Procédé mis en œuvre par ordinateur selon l'une quelconque des revendications 3 à 5, dans lequel la détermination, par le système informatique, d'une ou de plusieurs entités sémantiques (206) à partir du signal audio ambiant comprend l'entrée, dans un modèle de traitement du langage, du signal audio ambiant et la réception, du modèle de traitement du langage, des une ou plusieurs entités sémantiques (206), et/ou,
dans lequel la sélection, parmi chacun de la pluralité ordonnée de contextes, d'une des une ou plusieurs actions de commande candidates comprend la sélection itérative d'une action de commande sélectionnée parmi les une ou plusieurs actions de commande candidates et la détermination d'un état de contexte résultant de la pluralité ordonnée de contextes sur la base de l'action de commande sélectionnée.

7. Procédé mis en œuvre par ordinateur selon l'une quelconque des revendications 3 à 6, dans lequel la sélection, parmi chacun de la pluralité ordonnée de contextes, d'une des une ou plusieurs actions de commande candidates comprend la correspondance d'une des une ou plusieurs entités sémantiques (206) descriptives d'une action de commande avec l'une des une ou plusieurs actions de commande candidates.

8. Procédé mis en œuvre par ordinateur selon l'une quelconque des revendications 3 à 7, dans lequel la réalisation, par le système informatique, de l'action de commande sélectionnée comprend l'ouverture d'un contexte de la pluralité ordonnée de contextes qui est différent d'un contexte actuel, le contexte actuel étant réalisé par le système informatique avant la réalisation de l'action de commande sélectionnée.

9. Système informatique configuré pour fournir un contrôle amélioré du système informatique en réponse aux interactions ambiantes d'un utilisateur (301), le système informatique comprenant :
un ou plusieurs processeurs (111) ;
un ou plusieurs supports non transitoires lisibles par ordinateur qui stockent collectivement des instructions qui,
lorsqu'elles sont exécutées par les un ou plusieurs processeurs (111), amènent le système informatique à réaliser des opérations, les opérations comprenant :
l'obtention (702), par les un ou plusieurs processeurs (111), de données de contexte (204) comprenant un signal audio ambiant ;
la génération (704), par les un ou plusieurs processeurs (111), d'un chemin de commande (420, 510) sur la base au moins en partie des données de contexte (204), dans lequel le chemin de commande (420, 510) comprend une ou plusieurs actions de commande ordonnées ;
la fourniture (706), par les un ou plusieurs processeurs (111), d'un élément d'interface utilisateur interactif (301) décrivant le chemin de commande (420, 510) à l'utilisateur (301), l'élément d'interface utilisateur interactif (301) permettant à l'utilisateur (301) de sélectionner une action de commande sélectionnée parmi les une ou plusieurs actions de commande ordonnées pour être réalisées par les un ou plusieurs processeurs (111) ;
en réponse à la fourniture, par les un ou plusieurs processeurs (111), du chemin de commande (420) à l'utilisateur (301), la réception (708), de l'utilisateur (301) et par les un ou plusieurs processeurs (111), de l'action de commande sélectionnée parmi les une ou plusieurs actions de commande ordonnées, dans lequel le chemin de commande (420, 510) comprend une ou plusieurs actions de commande qui sont postérieures à l'action de commande sélectionnée ;
en réponse à la réception de l'action de commande sélectionnée, la détermination d'un chemin de commande corrigé (560), sur la base au moins en partie d'une action de commande utilisateur qui est réalisée par l'utilisateur (301) pour corriger l'action de commande sélectionnée après réception de l'action de commande sélectionnée, et du chemin de commande généré (420, 510), dans lequel le chemin de commande corrigé (560) comprend une ou plusieurs actions de commande corrigées qui sont postérieures à l'action de commande sélectionnée corrigée par l'action de commande utilisateur ;
la fourniture, par les un ou plusieurs processeurs (111), du chemin de commande corrigé (560) de sorte que l'utilisateur (301) peut demander au système informatique de mettre en œuvre au moins une partie du chemin de commande corrigé (560) ; et en réponse à la réception, de l'utilisateur (301) et par les un ou plusieurs processeurs (111), d'une action de commande sélectionnée parmi les une ou plusieurs actions de commande ordonnées du chemin de commande corrigé (560), la réalisation (710), par les un ou plusieurs processeurs (111), de l'action de commande sélectionnée pour contrôler les un ou plusieurs processeurs (111) sur la base de l'action de commande sélectionnée.

10. Système informatique selon la revendication 9, dans lequel les une ou plusieurs actions de commande ordonnées comprennent une pluralité ordonnée d'actions de commande, et dans lequel les instructions comprennent également la réalisation, par les un ou plusieurs processeurs (111), d'une ou de plusieurs actions de commande antérieures de la pluralité ordonnée d'actions de commande, les une ou plusieurs actions de commande antérieures étant antérieures à l'action de commande sélectionnée.

11. Système informatique selon la revendication 9 ou 10, dans lequel la génération, par les un ou plusieurs processeurs (111), d'un chemin de commande (420, 510) comprend :
la détermination, par les un ou plusieurs processeurs (111), d'une ou de plusieurs entités sémantiques (206) à partir du signal audio ambiant, les une ou plusieurs entités sémantiques (206) comprenant une séquence d'entités de commande ;
l'obtention, par les un ou plusieurs processeurs (111), d'une pluralité ordonnée de contextes du système informatique, chacun de la pluralité ordonnée de contextes décrivant une ou plusieurs actions de commande candidates et un ou plusieurs états de contexte ultérieurs, les un ou plusieurs états de contexte ultérieurs associés au système informatique résultant de la mise en œuvre des une ou plusieurs actions de commande candidates ; et
la sélection, parmi chacun de la pluralité ordonnée de contextes, d'une des une ou plusieurs actions de commande candidates à inclure dans le chemin de commande (420, 510) en tant qu'une des une ou plusieurs actions de commande, et de préférence,
dans lequel la pluralité ordonnée de contextes est au moins partiellement apprise, par un modèle d'apprentissage automatique, sur la base de l'utilisation antérieure du système informatique par l'utilisateur (301).

12. Système informatique selon la revendication 11, dans lequel la pluralité ordonnée de contextes est au moins partiellement interrogée à partir d'une ou de plusieurs applications définissant au moins partiellement la pluralité ordonnée de contextes.

13. Système informatique selon la revendication 11 ou 12, dans lequel la détermination, par les un ou plusieurs processeurs (111), d'une ou de plusieurs entités sémantiques (206) à partir du signal audio ambiant comprend l'entrée, dans un modèle de traitement du langage, du signal audio ambiant et la réception, du modèle de traitement du langage, des une ou plusieurs entités sémantiques (206).

14. Système informatique selon l'une quelconque des revendications 11 à 13, dans lequel la sélection, parmi chacun de la pluralité ordonnée de contextes, d'une des une ou plusieurs actions de commande candidates comprend la sélection itérative d'une action de commande sélectionnée parmi les une ou plusieurs actions de commande candidates et la détermination d'un état de contexte résultant de la pluralité ordonnée de contextes sur la base de l'action de commande sélectionnée.

15. Système informatique selon l'une quelconque des revendications 11 à 14, dans lequel la sélection, parmi chacun de la pluralité ordonnée de contextes, d'une des une ou plusieurs actions de commande candidates comprend la correspondance d'une des une ou plusieurs entités sémantiques (206) descriptives d'une action de commande avec l'une des une ou plusieurs actions de commande candidates.
